# EUROPÄISCHE PATENTANMELDUNG

(11) **EP 4 699 956 A1**
(43) Veröffentlichungstag der Anmeldung: **25.02.2026**
(21) Anmeldenummer: 24195996.4
(22) Anmeldetag: 22.08.2024
(51) Int. Cl.: B65G 1/04

(54) **WARENLAGERSYSTEM**

(71) Anmelder: FlexStore Systems UG, 83093 Bad Endorf (DE)
(72) Erfinder: FORSTER, Florian, 83093 Bad Endorf (DE); HROH, Sascha, 83098 Brannenburg (DE)

(57) **Zusammenfassung**

Warenlagersystem (1) mit einer Mehrzahl von vertikalen Schächten (2), einer Steuerung, einer Mehrzahl von Lagergutträgern (4) und mindestens einem Bediengerät (5), wobei die Lagergutträger (4) in jedem der Schächte (2) an einer Mehrzahl von vertikal beabstandeten Abstütz-Positionen (3) abstützbar sind; das mindestens eine Bediengerät (5) ausgebildet ist, jeweils mindestens einen einzulagernden Lagergutträger (4) außerhalb der Schächte (2) zu verfahren und von außen in einen ausgewählten Schacht (2) einzubringen; die Steuerung ausgebildet ist, eine Abstützung des mindestens einen einzulagernden Lagergutträgers (4) an einer Zielposition im ausgewählten Schacht (2) zu veranlassen, wobei die Steuerung die Zielposition aus der Mehrzahl vertikaler Abstütz-Positionen (3) auswählt, abhängig: von einer Gesamthöhe des einzulagernden Lagergutträgers (4) inklusive eines oder mehrerer gegebenenfalls darauf befindlichen Lagergüter (7), und/oder von einer Gesamthöhe mindestes eines im ausgewählten Schacht (2) befindlichen Lagergutträgers (4) inklusive eines oder mehrerer gegebenenfalls darauf befindlichen Lagergüter (7); sowie einen Lagergutträger (4) und ein Bediengerät (5) für ein Warenlagersystem (1) und ein Verfahren zur Einlagerung von Lagergut (7) in ein Warenlagersystem (1).

## Beschreibung

Die vorliegende Erfindung ist im Bereich der Logistik angesiedelt. Insbesondere betrifft die vorliegende Erfindung den Bereich der Intralogistik, vorzugsweise die Intralogistik von Distributions- und Logistikzentren.

In Distributions- und Logistikzentren kommen neben Regallagern häufig sogenannte Blocklager zum Einsatz. Grundsätzlich werden Blocklager gebildet aus mehreren rasterförmig aneinander angeordneten Behälterstapeln, wobei eine Bedienung des Blocklagers in der Regel von oben (oberhalb der Behälterstapel) oder von unten (unterhalb der Behälterstapel) erfolgt. Die Behälterstapel können frei stehend ausgebildet sein oder in Schächten angeordnet sein, beispielsweise entlang von Führungsschienen, Führungspfeilern oder Führungswänden angeordnet sein und sind somit gegen umstürzen gesichert.

Aus dem Stand der Technik sind vielfältige Varianten von Blocklagern bekannt.

Ein bekanntes Blocklager mit Bedienung von unten ist beispielsweise das System "Powercube" von der Jungheinrich AG, Hamburg, Deutschland, beschrieben u.a. auch in EP 4 238 902 A1. In diesem System werden alle Produkte in Behälter, bspw. Kisten, geladen. Diese Behälter werden von unten in einen vertikalen Schacht geladen. Dabei liegt der obige Behälter immer direkt auf dem darunter liegenden Behälter auf. Der unterste Behälter eines jeden Schachts ist durch ein Klinkensystem je Schacht gegen herunterfallen und damit aus dem Lager rausfallen gesichert. Die Behälter werden mit einem unter den Schächten verfahrbaren Fahrzeug von unten in einen jeweiligen Schacht geladen und aus einem Schacht entnommen. Das Fahrzeug bewegt sich hier unterhalb der Schächte auf einem Schienensystem und bewegt sich nicht in den Schacht. Bei diesem System wird viel Platz verloren, wenn die einzulagernde Ware niedriger ist als der Behälter. Dies verringert die Lagerdichte, da ein (oft relativ großer) Teil des Behälters leer bleibt. Zudem kann grundsätzlich nur so eingelagert werden, dass der obere Behälter durch den unteren gestützt wird. Daher ist auch eine Bauhöhe der Schächte und damit des Blocklagers begrenzt. Es können maximal so viele Behälter aufeinander gestapelt werden, wie der unterste Behälter tragen kann. Zusätzlich ist eine Verwendung dieses Lagersystems begrenzt auf kistenförmige Behälter welche aufeinander stapelbar sind. Das Ein- und Auslagern ist sehr energieaufwändig, da für den jeweiligen Prozess immer der komplette Behälterstapel eines Schachts angehoben werden muss. Eine Verwendung anderer Lagergutträger wie z.B. Trays mit darauf befindlicher Ware, welche über den Trayrand hinaussteht, beispielsweise in Form von Kartons, ist nicht möglich, da hier kein Stapel gebildet werden kann.

Ein weiteres bekanntes Blocklagersystem, ist beispielsweise das System "Autostore" der Autostore Ltd., Vindafjord, Norwegen. Hier erfolgt eine Bedienung von oben, ein Zugriff ist also immer nur auf den obersten Behälter eines Lagerturms bzw. Schachts möglich. In ähnlicher Weise wie im "Powercube" werden auch hier alle Produkte in Behälter eingebracht und darin gelagert. Diese Behälter werden dann aber von oben nach unten durch ein geeignetes Fahrzeug in einen jeweiligen Schacht hinunter gesenkt. Dabei liegt der obige Behälter immer direkt auf dem darunter liegenden Behälter auf, die Behälter werden also auch hier aufeinander gestapelt, was den Nachteil mit sich bringt, dass die gesamte Masse des kompletten Stapels je Schacht auf dem untersten Behälter lastet. Somit ist die Stapelhöhe und damit auch die Blocklagerhöhe durch die Stabilität des untersten Behälters in der Höhe begrenzt. Das Fahrzeug senkt einen Greifer mit einer "Winde" in den Schacht hinunter und kann dort den obersten Behälter greifen und nach oben heben. Das Fahrzeug bewegt sich oberhalb der Schächte auf einem Schienensystem. Auch bei diesem System wird viel Platz verloren, wenn die einzulagernde Ware niedriger ist als der Behälter. Es kann grundsätzlich nur so eingelagert werden, dass der obere Behälter durch den unteren gestützt wird. Eine Verwendung anderer Lagergutträger wie z.B. Trays bei denen die Ware über den Trayrand hinaussteht mit z.B. Kartons als Ware ist nicht möglich, da hier kein Stapel gebildet werden kann. Auch ist es nicht möglich, einen Behälter in einem relativ leeren Schacht ganz oben anzuordnen, um einen direkten Zugriff zu ermöglichen. Im Gegenteil muss für jeden Behälterzugriff ein Senken sowie ein Heben des Greifers bis zum obersten bereits eingelagerten Behälter stattfinden.

Ferner sind sogenannte Shuttle-Lager bzw. Regalbediengeräte-Lager bekannt. Diese weisen ein Regalsystem mit einzelnen Stellplätzen auf, in welche einfach- oder mehrfachtief der Lagergutträger horizontal gelagert wird. Hierbei handelt es sich in der Regel um ein Regallager. Dieses Regalsystem ist definiert durch eine Auflagefläche für den Lagergutträger je Stellplatz und einer seitlichen Einteilung. Die Höhe des Stellplatzes ist fix. Ist der Lagergutträger inkl. Ware niedriger als die fixe Stellplatzhöhe des Faches, so ist der darüberliegende Raum ungenutzt. Eine Seite des Stellplatzes ist offen. Auf dieser Seite befindet sich die Fahrgasse für die Bediengeräte (z.B. Shuttle oder Regalbediengerät), welche die Lagergutträger ein- und auslagern. Die Regalhöhe ist nicht flexibel. Dadurch wird bei niedrigeren Produkten viel Platz verloren. Das Shuttle bzw. Regalbediengerät benötigt Platz vor jedem Stellplatz zum seitlichen Verfahren, Aufnehmen und Abgeben von Lagergutträgern. Ebenso wird Platz zum Aufnehmen und Abgeben der Lagergutträger im Stellplatz benötigt. Dieser Platz kann nicht zum Lagern genutzt werden. Häufig benötigt ein solches System viel mehr Platz als ein Blocklager. Grundsätzlich sind Shuttle- und Regalbediengeräte-Lager weniger redundant, da bestimmte Gewerke einen Knotenpunkt bilden, durch welchen alle Lagergutträger müssen.

All diesen Lagern ist es gemein, dass sie nicht in der Lage sind, den benötigten Raum möglichst vollständig für Waren zu nutzen. Damit sind diese Systeme in ihrer Lagerdichte begrenzt. Aufgrund der hohen Anzahl an zu lagernder Ware wird für die Lagerung insb. in einem Distribustions- oder Logistikzentrum ein enormer Platzbedarf benötigt. Dies kommt daher, da alle herkömmlichen Lagersysteme gewisse Abstände und Freiräume für die Ein- und Auslagerung in die starren Stellplätze benötigen oder der Lagergutträger (z.B. Behälter) selbst die Höhe vorgibt und somit ebenso einen starren Stellplatz darstellt. Bei einem klassischen Blocklager werden als Lagergutträger ausschließlich Behälter verwendet und im Schacht übereinander oder untereinander gestapelt. Dadurch wird die Flexibilität des Blocklager auf den Behälter als Lagergutträger eingeschränkt und erfordert einen Decanting-Prozess (Beladen der Behälter mit Ware) im Eingang. Hierbei wird die Lagerdichte zusätzlich reduziert, da der Raum des Behälters bei niedriger Ware oder beim "leer" werden des Behälters ungenutzt bleibt. Bei hoher Ware begrenzt der Behälter dagegen das maximale Maß der Ware, da diese nicht darüber hinausstehen darf. Die Höhe des gesamten Behälterstapels und somit des Blocklagers ist wiederum vom Gesamtgewicht begrenzt, da der unterste Behälter immer die gesamte Last aufnehmen muss. Der Behälterstapel verhindert außerdem ein optimales Brandschutzkonzept, sowie einen optimalen Luftstrom, beispielsweise in einem Kühlbereich.

Im Stand der Technik fehlt es an einem System, welches eine höhere Lagerdichte ermöglicht, für schwere Lasten geeignet ist, energieeffizient betrieben werden kann, in hoher Bauhöhe realisiert werden kann, eine gute Belüftung der Waren, und/oder verbesserten Brandschutz gewährleistet.

Es besteht daher ein Bedarf nach einer Lagerlösung (beispielsweise einer Blocklager- oder Regallagerlösung) bzw. einem Warenlagersystem mit dem die oben genannten Nachteile zumindest teilweise überwunden werden können. Insbesondere besteht ein Bedarf nach einer Lagerlösung und/oder einem Warenlagersystem, das den Stand der Technik zumindest in einem der nachstehenden Punkte verbessert: höhere Lagerdichte, höherer Umschlag, einfachere Prozesse, höhere Automatisierung, zügige Betriebsabläufe, einfachere IT-Strategien, erhöhte Flexibilität und sichererer Betrieb.

Die vorstehend genannten Problematiken können zumindest teilweise überwunden werden, bzw. der vorstehend genannte Bedarf kann zumindest teilweise befriedigt werden durch die vorliegende Erfindung.

In einem ersten Aspekt betrifft die vorliegende Erfindung ein Warenlagersystem mit einer Mehrzahl von vertikalen Schächten, einer Steuerung, einer Mehrzahl von Lagergutträgern und mindestens einem Bediengerät. Die Lagergutträger sind in jedem der Schächte an einer Mehrzahl von vertikal beabstandeten Abstütz-Positionen abstützbar. Das mindestens eine Bediengerät ist vorzugsweise ausgebildet, jeweils mindestens einen einzulagernden Lagergutträger außerhalb der Schächte zu verfahren. Das mindestens eine Bediengerät ist ausgebildet, jeweils mindestens einen einzulagernden Lagergutträger, bevorzugt von außen, in einen der Schächte einzubringen. Die Steuerung ist ausgebildet, eine Abstützung des mindestens einen einzulagernden Lagergutträgers an einer Zielposition im ausgewählten Schacht zu veranlassen, wobei die Steuerung die Zielposition aus der Mehrzahl vertikaler Abstütz-Positionen auswählt, abhängig:
von einer Gesamthöhe des einzulagernden Lagergutträgers inklusive eines oder mehrerer gegebenenfalls darauf befindlichen Lagergüter, und/oder
von einer Gesamthöhe mindestes eines im ausgewählten Schacht befindlichen Lagergutträgers inklusive eines oder mehrerer gegebenenfalls darauf befindlichen Lagergüter.

Die Gesamthöhe kann das Maximum sein aus: einer Höhe von Unterkante Lagergutträger zu Oberkante Lagergut oder einer Höhe von Unterkante Lagergutträger zu Oberkante Lagergutträger. Die Gesamthöhe kann also definiert sein als das maximale Höhenmaß von einer Unterkante des Lagergutträgers zu einer obersten Kontur des Lagergutträgers inklusive gegebenenfalls auf dem Lagergutträger befindlicher Lagergüter.

In anderen Worten kann die Gesamthöhe definiert sein als die maximale Höhe, die der Lagergutträger zusammen mit eventuell darauf oder darin befindlichen Lagerguts aufweist. Beispielsweise kann die Gesamthöhe einer mit Lagergut beladenen Palette die Summe aus der Höhe der Palette selbst und der Höhe der darauf befindlichen Ware sein. Die Gesamthöhe einer leeren Palette kann die Höhe der Palette selbst sein. Die Gesamthöhe einer mit Lagergut beladenen Schale oder Kiste kann die Höhe von Unterkante zu Oberkante der Schale bzw. Kiste sein, evtl. zuzüglich eines Teils des Lagerguts, der über die Oberkante der Schale bzw. Kiste hinausragt.

Im Warenlagersystem verwendete Lagergutträger können alle von demselben Typ sein, d.h. die Abmessungen, insbesondere die Höhe aller Lagergutträger ist konstant. Es können aber auch Lagergutträger (z.B. Trays oder Tablare) mit verschiedenen Höhen, insbesondere mit unterschiedlichen Bodendicken vorgesehen sein. Somit kann sich die Gesamthöhe eines Lagergutträgers inklusive darauf befindlichem Lagergut durch die Höhe des Lagerguts und/oder durch den gewählten Lagergutträger beeinflussen lassen. Abhängig vom Typ des Lagergutträgers kann die Höhe des Lagergutträgers und/oder die Bodendicke des Lagergutträgers die Gesamthöhe beeinflussen.

Die Gesamthöhe mindestes eines im ausgewählten Schacht befindlichen Lagergutträgers inklusive eines oder mehrerer gegebenenfalls darauf befindlichen Lagergüter kann auch eine Summe mehrerer einzelner Gesamthöhen mehrerer im Schacht befindlicher Lagergutträger umfassen.

Das Warenlagersystem gewährleistet bevorzugt eine maximale Lagerdichte durch die individuelle Lagerung der Lagergutträger entsprechend der tatsächlichen Ladungshöhe mittels Abstützung des Lagergutträgers im Schacht. Der Lagergutträger verfügt somit also über eine Selbsthaltefunktion, oder, anders ausgedrückt, das Warenlagersystem weist individuelle Haltepositionen im Zusammenspiel mit den Lagergutträgern auf.

Eine Abstützposition kann im Rahmen der vorliegenden Erfindung dadurch definiert sein, dass ein Lagergutträger zumindest teilweise dort abgestützt werden kann, sodass er nicht nach unten fällt oder verrutscht. Eine Abstützposition kann daher mittels lediglich einer Fläche realisiert sein, an der ein Lagergutträger mittels Form- und/oder Reibschluss abgestützt bzw. arretiert werden kann. Eine Abstützung und/oder Arretierung kann ein Unterbinden zumindest eines Freiheitsgrads des Lagergutträgers bedeuten, vorzugsweise ein Unterbinden eines ersten translatorischen Freiheitsgrads (z.B. vertikal nach unten) und eines zweiten translatorischen Freiheitsgrads (horizontal) und/oder zumindest eines rotatorischen Freiheitsgrads.

Bevorzugt weist ein Schacht im Warenlagersystem, weiter bevorzugt ein jeder der Schächte, mindestens 10, weiter bevorzugt mindestens 50, weiter bevorzugt mindestens 100 vertikal übereinander angeordnete Abstützpositionen auf.

Die Begriffe "vertikal" bzw. "horizontal" bezeichnen im Rahmen der vorliegenden Erfindung Richtungen, die in Bezug auf das Warenlagersystem hauptsächlich und/oder in etwa vertikal bzw. horizontal sind. Insbesondere sind damit auch Richtungen umfasst, die eine Abweichung von maximal 15°, bevorzugt maximal 10°, weiter bevorzugt maximal 5°, weiter bevorzugt maximal 2° zur Vertikalen bzw. Horizontalen aufweisen.

Ein Schacht bezeichnet im Rahmen der vorliegenden Erfindung eine Konstruktion und/oder einen begrenzten Raum, in der Lagergutträger eingelagert und/oder vertikal bewegt werden können. Insbesondere kann ein Schacht bevorzugt von einer oder mehreren Seitenpfeilern bzw. Seitenwänden und/oder einer oder mehreren Eckpfeilern begrenzt sein. Anders ausgedrückt kann ein Schacht vorzugsweise als dreidimensionaler, sich bevorzugt vertikal erstreckender, Raum definiert werden, der von mindestens zwei Pfeilern, und/oder von mindestens einer Seitenwand und mindestens einem Pfeiler, und/oder von mindestens zwei Seitenwänden begrenzt wird. Eine Seitenwand kann bevorzugt eine Platte oder ein Pfeiler sein. Ein Pfeiler kann bevorzugt einen rechteckigen, runden, L-förmigen, C-förmigen, U-förmigen, Z-förmigen oder kreuzförmigen Querschnitt aufweisen und sich weiter bevorzugt säulenartig in die Höhe erstrecken. Ein Pfeiler kann entweder als Eckpfeiler ausgebildet sein oder als Seitenpfeiler und vorzugsweise zur Begrenzung von mindestens einem Schacht oder von zwei bis vier benachbarten Schächten beitragen. Bevorzugt ist jeder Schacht definiert durch mindestens zwei, weiter bevorzugt vier, Eckpfeiler und/oder durch mindestens zwei, weiter bevorzugt vier, Seitenwände bzw. Seitenpfeiler und/oder durch einen Freiraum zwischen den Eckpfeilern bzw. Seitenwänden, in welchem ein Lagergutträger vertikal verfahrbar ist und welcher eine annährend gleich große Grundfläche wie der Lagergutträger aufweist.

Der Schacht kann (bzw. die Schächte können) bevorzugt eine vieleckige, insbesondere eine quadratische, eine rechteckige, eine kreisförmige und/oder eine ovale Grundfläche aufweisen, wobei die Grundfläche bevorzugt in einer Draufsicht auf den Schacht definierbar ist. Der Schacht kann entsprechend einen korrespondierenden dreidimensionalen Freiraum bilden, beispielsweise also quaderförmig und/oder zylindrisch ausgebildet sein. Der Schacht kann insbesondere von oben, von unten und/oder seitlich zugänglich sein. Anders ausgedrückt kann der Schacht ausgebildet sein, sodass Lagergutträger von unten, von oben, und/oder seitlich in den Schacht eingebracht bzw. aus dem Schacht entnommen werden können. Insbesondere kann der Schacht inklusive der Mehrzahl von Abstützpositionen derart ausgebildet sein, dass ein Lagergutträger vertikal durch den Schacht und vorbei an mindestens einer, vorzugsweise mehreren, Abstützpositionen bewegt werden kann.

Das Bediengerät kann vorzugsweise ein Flurförderzeug, ein Transportfahrzeug, Schienenfahrzeug, Raumportal, und/oder eine Kombination dieser sein. Das Bediengerät kann frei verfahrbar oder geführt sein. Insbesondere kann das Bediengerät auch raumgebunden sein und beispielsweise lediglich eine bewegliche Transporteinheit aufweisen. Das Bediengerät kann beispielsweise ein Raumportal, ein Deckenkran oder allgemein ein Hubzeug sein. Bevorzugt ist das Bediengerät ein fahrerloses Transportfahrzeug, FTF, ein schienengeführtes Fahrzeug, ein Autonome Mobile Robot, AMR, oder ein Automated Guided Vehicle, AGV.

Die Steuerung kann bevorzugt die Zielposition aus der Mehrzahl vertikaler Abstütz-Positionen auswählen, abhängig von der Abstütz-Position eines oder mehrerer anderer im ausgewählten Schacht befindlicher Lagergutträger, wobei bevorzugt die Lagergutträger inklusiv des darauf befindlichen Lagerguts berücksichtigt werden. Vorzugsweise berücksichtigt die Steuerung die Höhe und/oder die Position anderer im Schacht befindlicher Lagergutträger, weiter bevorzugt die Gesamthöhe mindestens eines im ausgewählten Schacht befindlichen Lagergutträgers inklusive eines oder mehrerer gegebenenfalls darauf befindlichen Lagergüter und/oder die Position des mindestens einen im ausgewählten Schacht befindlichen Lagergutträgers. Somit kann das Lager dynamisch gestaltet werden und/oder eine sehr hohe Lagerdichte kann realisiert werden.

Bevorzugt ist die Mehrzahl vertikal beabstandeter Abstütz-Positionen jeweils auf gegenüberliegenden Seiten und/oder in gegenüberliegenden Ecken der Schächte ausgebildet. Bevorzugt erfolgt die Abstützung an der Zielposition auf gegenüberliegenden Seiten und/oder in gegenüberliegenden Ecken des ausgewählten Schachts, weiter bevorzugt wobei jeweils mindestens zwei gegenüberliegende Abstütz-Positionen in einer gemeinsamen horizontalen Ebene oder in zwei parallelen Ebenen liegen. Besonders bevorzugt kann die Abstützung an allen Ecken und/oder an allen Seitenflächen des ausgewählten Schachts bzw. des einzulagernden Lagergutträgers erfolgen. So kann eine sichere und/oder robuste Abstützung, auch von schwer beladenen Lagergutträgern erfolgen.

Die Abstützung des Lagergutträgers kann vorzugsweise kraftschlüssig und/oder formschlüssig und/oder mittels magnetischer Kräfte erfolgen. Weiter bevorzugt kann die Abstützung des Lagergutträgers durch Verschieben und/oder Verdrehen erfolgen. Eine Abstützung des Lagergutträgers durch Verschieben und/oder Verdrehen beinhaltet insbesondere eine Abstützung durch Verschieben und Abstellen bzw. durch Verdrehen und Abstellen. Alternativ und/oder zusätzlich kann eine Abstützung des Lagergutträgers durch Verschieben und/oder Verdrehen aber auch ein Klemmen, Einrasten, Einklinken, Einhaken oder Einlegen des Lagergutträgers umfassen.

Bevorzugt ist der einzulagernde Lagergutträger im ausgewählten Schacht von einer abgestützten Anordnung in eine nicht-abgestützte Anordnung überführbar, weiter bevorzugt durch Verdrehen und/oder horizontales Verschieben (und vorzugsweise anschließendes Abstellen) des einzulagernden Lagergutträgers im ausgewählten Schacht, weiter bevorzugt mittels des Bediengeräts. Die Außenkontur des einzulagernden Lagergutträgers kann sich in der nicht-abgestützten Anordnung bevorzugt komplett in einem Freiraum des ausgewählten Schachts befinden. Der einzulagernde Lagergutträger kann in der nicht-abgestützten Anordnung vertikal durch den ausgewählten Schacht transportierbar sein, vorzugsweise durch den gesamten ausgewählten Schacht hindurch, d.h. zumindest von einem unteren Ende des ausgewählten Schachts bis zu einem oberen Ende des ausgewählten Schachts. In der abgestützten Anordnung können in einer Draufsicht Bereiche der Außenkontur des einzulagernden Lagergutträgers bevorzugt in die den ausgewählten Schacht begrenzenden Pfeiler und/oder Seitenwände ragen. Der einzulagernde Lagergutträger ist in der abgestützten Anordnung bevorzugt im ausgewählten Schacht abgestützt, kann insbesondere also nicht durch den ausgewählten Schacht hindurch nach unten fallen.

Bevorzugt können die Lagergutträger jeweils mindestens zwei Träger-Abstützelemente aufweisen, wobei die Träger-Abstützelemente weiter bevorzugt an gegenüberliegenden Seiten und/oder an diagonal gegenüberliegenden Kanten bzw. Ecken des jeweiligen Lagergutträgers angeordnet sind. Mit anderen Worten können die Lagergutträger vorzugsweise eine horizontale Grundfläche aufweisen, wobei die Träger-Abstützelemente vorzugsweise an gegenüberliegenden Seiten der Grundfläche vorgesehen sind.

Die Träger-Abstützelemente sind vorzugsweise ausgebildet, den jeweiligen Lagergutträger in der abgestützten Anordnung in einem jeweiligen der Schächte abzustützen und/oder gegen horizontales Verschieben und/oder gegen ein Verdrehen (insbesondere ein Verdrehen um eine Vertikalmittelachse des jeweiligen Schachts und/oder des jeweiligen Lagergutträgers) zu sichern, wenn der jeweilige Lagergutträger an der Zielposition im jeweiligen Schacht abgestützt ist.

Die Träger-Abstützelemente können in einer ersten bevorzugten Variante Abstellflächen und/oder -kanten (z.B. eine Außenkante, Krempe und/oder Bodenfläche des Lagergutträgers) sein. Alternativ oder zusätzlich können die Träger Abstützelemente bevorzugt durch Nuten und/oder Aussparungen realisiert sein, die sich bevorzugt in einer Seitenwand bzw. Seitenfläche des Lagergutträgers befinden. Eine Aussparung kann eine Hinterschneidung zum Abstützen bzw. Eingreifen sein, wobei die Aussparung vorzugsweise in zumindest eine Horizontalrichtung offen ist.

In einer zweiten bevorzugten Variante, alternativ oder zusätzlich zur ersten bevorzugten Variante, können die Träger-Abstützelemente gegenüber dem Grundkörper des Lagergutträgers beweglich sein und weiter bevorzugt ausgebildet sein, zur Abstützung des jeweiligen Lagergutträgers (in einem jeweiligen Schacht) von einer ersten Anordnung in eine zweite Anordnung überführt zu werden, wobei die Überführung durch Bewegen der Träger-Abstützelemente gegenüber dem Grundkörper erfolgt, vorzugsweise wobei der jeweilige Lagergutträger, wenn die Träger-Abstützelemente in der zweiten Anordnung sind, vertikal im jeweiligen Schacht gehalten wird und/oder wobei der jeweilige Lagergutträger, wenn die Träger-Abstützelemente in der ersten Anordnung sind, durch den jeweiligen Schacht transportierbar oder seitlich aus dem jeweiligen Schacht entnehmbar ist. In anderen Worten kann sich der jeweilige Lagergutträger mit den Träger-Abstützelementen in der zweiten Anordnung in der abgestützten Anordnung befinden und mit den Träger-Abstützelementen in der ersten Anordnung in der nicht-abgestützten Anordnung.

Die Träger-Abstützelemente können, bevorzugt in der zweiten Variante, durch Klemmbacken, Klappen, Stützdorne und/oder Stifte realisiert sein. Weiter bevorzugt ist eine horizontale Ausdehnung des Lagergutträgers mit den Träger-Abstützelementen in der zweiten Anordnung größer als mit den Träger-Halteelementen in der ersten Anordnung. Mit anderen Worten stehen die Träger-Abstützelemente in der zweiten Anordnung bevorzugt seitlich weiter vom jeweiligen Lagergutträger hervor, als in der ersten Anordnung.

In einer dritten bevorzugten Variant können die Träger-Abstützelemente Zahnräder oder Ritzel oder auch eine Rolle (etwa eine Rolle mit mehreren Vorsprüngen) sein. Dann weist bevorzugt jeder Schacht im Warenlagersystem mindestens eine Zahn- oder Lochstange auf, welche sich vertikal durch den Schacht erstreckt. Vorzugsweise können die als Zahnrad oder Ritzel ausgebildeten Träger-Abstützelemente mit der Zahnstange eingreifen und in der ersten Anordnung an der Zahnstange entlang abrollen. Bevorzugt kann mit den Träger-Abstützelementen in der zweiten Anordnung eine Rotation der als Zahnrad oder Ritzel ausgebildeten Träger-Abstützelemente in zumindest eine Richtung blockiert sein, sodass der Eingriff der als Zahnrad oder Ritzel ausgebildeten Träger-Abstützelemente mit der Zahnstange eine vertikale Bewegung des jeweiligen Lagergutträgers verhindert. Der Lagergutträger ist somit in der abgestützten Anordnung.

In jedem Fall können die Träger-Abstützelemente in die erste Anordnung oder in die zweite Anordnung vorgespannt sein.

Mittels derart gestalteten Lagergutträgern kann die Flexibilität im Lager erhöht werden. Zusätzlich können bevorzugt sowohl eine hohe Lagerdichte als auch eine gute Durchlüftung realisiert werden. Derart gestaltete Lagergutträger können auch zu einem sicheren Brandschutzkonzept beitragen. Eine Abstützung der Lagergutträger kann an den Schächten selbst (bzw. robusten Pfeilern oder Seitenwänden der Schächte) erfolgen und somit kann die Lagerhöhe gegenüber bekannten Blocklagern erhöht werden. Die Gesamt-Lagerhöhe und/oder die optimale Lastverteilung im Lager kann vergleichbar zu Regallagern gestaltet sein.

Bevorzugt ist das Bediengerät ausgebildet, die Lagergutträger in die nicht-abgestützte und/oder in die abgestützte Anordnung zu bringen, vorzugsweise mittels einer Drehung der Lagergutträger im Schacht (vorzugsweise um eine Vertikalmittelachse des ausgewählten Schachts und/oder Lagergutträgers) oder mittels einer horizontalen Verschiebung der Lagergutträger im Schacht. In anderen Worten kann das Bediengerät ausgebildet sein, einen Lagergutträger zur Abstützung im Schacht in einer horizontalen Ebene zu verschieben und anschließend abzustellen und/oder um eine Vertikalachse, vorzugsweise um eine Vertikalmittelachse des Lagergutträgers und/oder Schachts um vorzugsweise mindestens 2°, weiter bevorzugt mindestens 5°, weiter bevorzugt mindestens 10° zu drehen und anschließend abzustellen. Alternativ oder zusätzlich kann das Bediengerät bevorzugt ausgebildet sein, die Träger-Abstützelemente in die erste Anordnung und/oder in die zweite Anordnung zu bringen.

Mindestens einer der Lagergutträger kann einen Mechanismus aufweisen, um die Träger-Abstützelemente in die erste Anordnung und/oder in die zweite Anordnung zu bringen, vorzugsweise wobei das Bediengerät und/oder die Steuerung ausgebildet ist, den Mechanismus zu betätigen, stärker bevorzugt durch Übertragung einer Kraft vom Bediengerät auf den Mechanismus. Das Bediengerät weist bevorzugt einen Aktivierungsmechanismus auf, um den Mechanismus des Lagergutträgers zu betätigen.

Bevorzugt kann jeder Schacht an jeder seiner Abstützpositionen Schacht-Abstützelemente aufweisen. Die Schacht-Abstützelemente können vorzugsweise als Klemmflächen und/oder eine Mehrzahl von Finnen, horizontalen Abstütz-, Abstell-, Halte- oder Auflageflächen, Nuten, Ausbrüchen, Aussparungen, Bohrungen oder Bolzen, Haken und/oder Stiften ausgebildet sein, an denen die Lagergutträger abstützbar sind. Anders ausgedrückt kann jeder Schacht vorzugsweise Klemmflächen und/oder eine Mehrzahl von Finnen, horizontalen Abstütz-, Abstell-, Halte-, Auflageflächen, Nuten, Ausbrüchen, Aussparungen, Bohrungen, Bolzen, Haken und/oder Stiften aufweisen, an denen die Lagergutträger abstützbar sind. Aussparungen können insbesondere Hinterschneidungen zum Abstützen oder Eingreifen eines Lagergutträgers oder Lagergutträger-Abstützelements sein, vorzugsweise wobei die Aussparungen in eine Horizontalrichtung offen sind. Die Schacht-Abstützelemente (insbesondere bei Ausbildung als Finnen, horizontalen Abstütz-, Abstell-, Halte-, Auflageflächen, Nuten, Ausbrüchen, Aussparungen, Bohrungen, Bolzen, Haken und/oder Stiften) können vorzugsweise in gleichmäßigen vertikalen Abständen angeordnet sein, wobei die Abstände bevorzugt mindestens 10 mm, weiter bevorzugt mindestens 20 mm und/oder maximal 500 mm, weiter bevorzugt maximal 200 mm betragen. Die Schacht-Abstützelemente können weiter bevorzugt an mindestens zwei Pfeilern und/oder Seitenwänden des Schachts ausgebildet sein. Eine entsprechende Ausbildung von Schacht und Lagergutträger, insb. von Schacht-Abstützelement und Lagergutträger oder Träger-Abstützelement kann vorteilhaft dazu beitragen, dass Lagergutträger an einer Vielzahl von vertikalen Positionen, die vorzugsweise in kleinen Inkrementen auswählbar sind, abgestützt und somit im Schacht gehalten werden können (also gelagert werden können). Vorzugsweise können die Lagergutträger dabei auch gegen ein unbeabsichtigtes Lösen aus dem Schacht gesichert werden. Insbesondere können Schacht und Lagergutträger entsprechend gestaltet werden, um eine Klemmverbindung, Abstütz-, bzw. Abstellverbindung, eine Steckverbindung oder eine Bajonett-Verbindung untereinander einzugehen. Somit können die Lagergutträger, bevorzugt inklusive eines oder mehrerer darauf befindlicher Lagergüter, höhenabhängig und/oder an flexiblen Positionen im Schacht gelagert werden. Insbesondere kann bevorzugt eine Blocklageranordnung mit einer Vielzahl von Schächten realisiert werden, wobei einzelne Lagergüter nicht aufeinander gestapelt werden und dennoch in den Schächten übereinander angeordnet werden können. Dies kann die Lagerdichte erhöhen und/oder Lagerungsprozesse vereinfachen.

Die Schächte können vorzugsweise in einem Raster angeordnet sein. Weiter bevorzugt kann jeder Schacht Eckpfeiler aufweisen und eine Mehrzahl der Eckpfeiler im Warenlagersystem kann als Eckpfeiler für mindestens zwei, vorzugsweise vier angrenzende Schächte dienen. Alternativ und/oder bevorzugt kann jeder Schacht Seitenwände bzw. Seitenpfeiler aufweisen und eine Mehrzahl der Seitenwände bzw. Seitenpfeiler im Warenlagersystem kann als Seitenwand bzw. Seitenpfeiler für zwei oder sogar vier benachbarte Schächte dienen. Jeder Schacht kann definiert sein durch einen Freiraum zwischen den den Schacht begrenzende Seitenwände und/oder Pfeiler. Vorzugsweise ist dieser Freiraum ein Freiraum, in welchem der einzulagernde Lagergutträger vertikal verfahrbar ist und welcher eine horizontale Grundfläche aufweist, welche vorzugsweise maximal 120 % einer horizontalen Projektion des einzulagernden Lagergutträgers beträgt. Bevorzugt weisen die Schächte einen viereckigen, weiter bevorzugt rechteckigen, Querschnitt (insb. in einer Draufsicht) auf.

Die Schächte können einen lichten Querschnitt zwischen 0,12 m² und 2,3 m², weiter bevorzugt zwischen 0,24 m² und 1,44 m² aufweisen.

Das Warenlagersystem kann bevorzugt mindestens 4, weiter bevorzugt mindestens 60, weiter bevorzugt mindestens 100, weiter bevorzugt mindestens 500, weiter bevorzugt mindestens 1000 Schächte aufweisen.

Die Schächte können eine Höhe von mindestens 0,5 m, weiter bevorzugt mindestens 4 m, weiter bevorzugt mindestens 8 m, weiter bevorzugt mindestens 12 m, weiter bevorzugt mindestens 30 m aufweisen.

Bevorzugt können die Schächte in zumindest einem Warenlagersegment gleich hoch und/oder gleich groß sein, wobei das Warenlagersegment mindestens 12, bevorzugt zueinander benachbarte, Schächte umfasst. Somit kann sich ein Warenlagersystem mit unterschiedlich hohen Warenlagersegmenten bilden lassen (beispielsweise abhängig von gelagertem Produkt oder Hallenhöhe).

Die Schächte und/oder das Bediengerät kann ausgebildet sein, die Lagergutträger von oben und/oder von unten in die Schächte einzubringen. In anderen Worten können die Schächte und/oder das Bediengerät ausgebildet sein, dass der einzulagernde Lagergutträger aus einem Bereich oberhalb einer vertikalen Schachtbegrenzung (beispielsweise Seitenwände oder Pfeiler) und/oder oberhalb der Mehrzahl von vertikal beabstandeten Abstützpositionen, d.h. von oben, in den Schacht eingebracht und vertikal durch den Schacht, bevorzugt entlang von zumindest einem Teil der Mehrzahl von vertikal beabstandeten Abstützpositionen, nach unten verfahren werden kann. Zusätzlich oder alternativ können die Schächte und/oder das Bediengerät ausgebildet sein, dass der einzulagernde Lagergutträger aus einem Bereich unterhalb einer vertikalen Schachtbegrenzung (beispielsweise Seitenwände oder Pfeiler) und/oder unterhalb der Mehrzahl von vertikal beabstandeten Abstützpositionen, d.h. von unten, in den Schacht eingebracht und vertikal durch den Schacht, bevorzugt entlang von zumindest einem Teil der Mehrzahl von vertikal beabstandeten Abstützpositionen, nach oben verfahren werden kann. Alternativ oder zusätzlich können die Schächte und/oder das Bediengerät zumindest teilweise ausgebildet sein, die Lagergutträger seitlich, d.h. von zumindest einer Seite, in die Schächte einzubringen.

Das Warenlagersystem kann ferner mindestens eine Vermessungseinheit und/oder Sensorik aufweisen, die ausgebildet ist, eine Höhe des einzulagernden Lagergutträgers, eine Höhe von auf dem einzulagernden Lagergutträger befindlichen Lagerguts und/oder die Gesamthöhe des einzulagernden Lagergutträgers inklusive eines oder mehrerer gegebenenfalls darauf befindlichen Lagergüter festzustellen. Alternativ oder bevorzugt kann das Warenlagersystem ferner mindestens eine Vermessungseinheit und/oder Sensorik aufweisen, die ausgebildet ist, eine Höhe des einzulagernden Lagergutträgers, den einzulagernden Lagergutträger inklusive eines oder mehrerer gegebenenfalls darauf befindlichen Lagergüter und/oder das auf dem einzulagernden Lagergutträger befindliche Lagergut in ein Höhenraster einzuordnen.

Bevorzugt ist das Bediengerät ausgebildet, mindestens einen Lagergutträger aufzunehmen und den aufgenommenen Lagergutträger von oben und/oder von unten in einen der Schächte einzubringen. Bevorzugt ist das Bediengerät ausgebildet, über den Schächten und/oder unter den Schächten zu verfahren. Vorzugsweise weist das Bediengerät die Vermessungseinheit und/oder Sensorik zur Vermessung auf.

In einem zweiten Aspekt betrifft die vorliegende Erfindung einen Lagergutträger für ein Warenlagersystem nach dem ersten Aspekt der Erfindung und/oder einen Lagergutträger für ein Warenlagersystem mit einer Mehrzahl von vertikalen Schächten, einer Steuerung und mindestens einem Bediengerät, wobei der Lagergutträger in jedem der Schächte an einer Mehrzahl von vertikal beabstandeten Abstütz-Positionen abstützbar ist, wobei der Lagergutträger bevorzugt dazu ausgebildet ist, von dem mindestens einen Bediengerät außerhalb der Schächte verfahren zu werden und von außen (bevorzugt von oben und/oder unten) in einen der Schächte eingebracht zu werden, wobei der Lagergutträger mindestens zwei Träger-Abstützelemente aufweist, die gegenüber einem Grundkörper des Lagergutträgers beweglich sind und dazu ausgebildet sind, zur Abstützung des jeweiligen Lagergutträgers von einer ersten Anordnung in eine zweite Anordnung überführt zu werden, wobei die Überführung vorzugsweise durch Bewegen derTräger-Abstützelemente gegenüber dem Grundkörper erfolgt, wobei der Lagergutträger mit den Träger-Abstützelementen in der zweiten Anordnung vertikal im Schacht gehalten wird und/oder wobei der Lagergutträger mit den Träger-Abstützelementen in der ersten Anordnung durch den Schacht transportierbar ist, vorzugsweise vertikal durch den Schacht transportierbar ist.

Der Lagergutträger verfügt also über eine "Selbsthaltefunktion" bzw. "Abstützfunktion" (z.B. realisiert durch die Träger-Abstützelemente), welche bei entsprechender Position im Schacht aktiviert werden kann. Die Lagergutträger, vorzugsweise inklusive einem oder mehrerer gegebenenfalls darauf befindlichen Lagergüter, können somit entsprechend der tatsächlichen Ladungshöhe optimiert gelagert werden, da die Stellplatzhöhe individuell auf die tatsächliche Ladungshöhe bzw. auf die tatsächliche Gesamthöhe des Lagergutträgers inklusive einem oder mehrerer gegebenenfalls darauf befindlichen Lagergüter anpassbar ist. Die Lagergutträger müssen dabei nicht aufeinander gestapelt werden. Flexibilität, Gesamtkapazität, insbesondere maximale Lagerhöhe, und/oder Lagerdichte in einem Lager können somit vorteilhaft gesteigert werden.

Bevorzugt weist der Lagergutträger einen Mechanismus auf, der ausgebildet ist, um die Träger-Abstützelemente in die erste Anordnung und/oder in die zweite Anordnung zu bringen. Weiter bevorzugt ist der Mechanismus ausgebildet, über das Bediengerät und/oder die Steuerung betätigt zu werden, weiter bevorzugt durch Übertragung einer Kraft vom Bediengerät auf den Mechanismus. Insbesondere kann der Lagergutträger eine mechanische Schnittstelle aufweisen, über die das Bediengerät den Mechanismus betätigen kann.

Bevorzugt sind die Träger-Abstützelemente des Lagergutträgers in die erste Anordnung oder in die zweite Anordnung vorgespannt.

Bevorzugt ist der Lagergutträger dafür ausgelegt, eine Last von mindestens 0,5 kg, weiter bevorzugt mindestens 25 kg, weiter bevorzugt mindestens 50 kg, weiter bevorzugt mindestens 100 kg, weiter bevorzugt mindestens 200 kg zu tragen und/oder eine Last von maximal 30 kg, weiter bevorzugt maximal 200 kg, weiter bevorzugt maximal 500 kg, weiter bevorzugt maximal 1000 kg, weiter bevorzugt maximal 1500 kg zu tragen.

Bevorzugt hat der Lagergutträger eine viereckige Grundfläche, weiter bevorzugt eine Grundfläche von mindestens 150 mm x 100 mm, weiter bevorzugt mindestens 200 mm x 300 mm, weiter bevorzugt mindestens 300 mm × 400 mm, weiter bevorzugt von mindestens 600 mm × 400 mm und/oder von maximal 1400 mm × 1400 mm, weiter bevorzugt von maximal 1200 mm × 1200 mm, weiter bevorzugt von maximal 1200 mm × 800 mm, weiter bevorzugt von maximal 1000 mm × 1000 mm, weiter bevorzugt von maximal 650 mm × 450 mm, weiter bevorzugt von maximal 600 mm × 600 mm. Insbesondere kann der Lagergutträger bzw. eine Grundfläche des Lagergutträgers die Maße 350 mm × 450 mm, 650 mm × 450 mm, 1250 mm × 850 mm oder 1250 mm × 1250 mm aufweisen.

Die Träger-Abstützelemente können an gegenüberliegenden Seiten und/oder gegenüberliegenden Ecken des Lagergutträgers vorgesehen sein, vorzugsweise an gegenüberliegenden Seiten und/oder gegenüberliegenden Ecken einer Grundfläche des Lagergutträgers, wobei die Grundfläche vorzugsweise horizontal ist.

Eine horizontale Ausdehnung des Lagergutträgers mit den Träger-Abstützelementen in der zweiten Anordnung kann bevorzugt größer sein als mit den Abstützelementen in der ersten Anordnung. Mit anderen Worten können die Träger-Abstützelemente in der zweiten Anordnung seitlich weiter vom jeweiligen Lagergutträger als in der ersten Anordnung hervorstehen. Die Träger-Abstützelemente können bevorzugt Klemmbacken, Klappen, Stützdorne und/oder Stifte sein. Alternativ und/oder bevorzugt können die Träger-Abstützelemente als nach außen klappbare Seitenwände des Lagergutträgers ausgebildet sein oder durch Vergrößerung der Grundfläche mittels auseinander fahren des Lagergutträgers realisiert werden. Alternativ können die Träger-Abstützelemente Zahnräder oder Ritzel (bzw. ein Zahn der Zahnräder bzw. Ritzel) sein.

In einem dritten Aspekt betrifft die vorliegende Erfindung ein Bediengerät für ein Warenlagersystem nach dem ersten Aspekt der Erfindung und/oder ein Bediengerät für ein Warenlagersystem mit einer Mehrzahl von vertikalen Schächten, einer Steuerung und einer Mehrzahl von Lagergutträgern, wobei die Lagergutträger und die Schächte zur Abstützung der Lagergutträger an einer Mehrzahl vertikal beabstandeter Abstütz-Positionen in einem jeweiligen der Schächte ausgebildet sind, wobei das Bediengerät ausgebildet ist, jeweils mindestens einen einzulagernden Lagergutträger außerhalb der Schächte zu verfahren und/oder von außen, vorzugsweise von oben und/oder unten, in einen der Schächte einzubringen. Das Bediengerät ist ferner ausgebildet, eine Anweisung der Steuerung zu empfangen und die Lagergutträger an einer durch die Steuerung aus der Mehrzahl von Abstütz-Positionen ausgewählten Abstütz-Position abzustützen bzw. zu arretieren.

Bevorzugt ist das Bediengerät ein Flurförderzeug, bevorzugt ein fahrerloses Transportfahrzeug, FTF, ein schienengeführtes Fahrzeug, ein Autonome Mobile Robot, AMR, ein Automated Guided Vehicle, AGV. Weiter bevorzugt ist das Bediengerät ausgebildet, außerhalb der Schächte, vorzugsweise über den Schächten und/oder unter den Schächten und/oder seitlich an und/oder neben den Schächten, zu verfahren. Alternativ bevorzugt ist das Bediengerät ein Raumportal, wobei eine Transporteinheit des Raumportals bevorzugt ausgebildet ist, über den Schächten zu verfahren und zumindest teilweise in die Schächte hinein absenkbar und/oder aus den Schächten hinaus hebbar ist. Alternativ kann das Bediengerät ein Fahrzeug sein, welches am Boden horizontal und im Schacht vertikal verfahrbar ist. Derartige Bediengeräte können als Kletterfahrzeug bezeichnet werden und bevorzugt eingesetzt werden, um Lagergutträger von unten ein- bzw. auszulagern.

Bevorzugt ist das Bediengerät ausgebildet, mindestens einen Lagergutträger aufzunehmen, wobei der Lagergutträger bevorzugt ein Lagergutträger nach dem zweiten Aspekt der Erfindung ist. Bevorzugt kann das Bediengerät ferner ausgebildet sein, die Höhe des aufgenommenen Lagergutträgers, eine Höhe von auf dem aufgenommenen Lagergutträger befindlichen Lagergut und/oder eine Gesamthöhe des aufgenommenen Lagergutträgers inklusive eines oder mehrerer gegebenenfalls darauf befindlichen Lagergüter festzustellen. Alternativ oder zusätzlich kann das Bediengerät dazu ausgebildet sein, die Höhe des aufgenommenen Lagergutträgers, die Höhe von auf dem aufgenommenen Lagergutträger befindlichem Lagergut und/oder die Gesamthöhe des aufgenommenen Lagergutträgers inklusive eines oder mehrerer gegebenenfalls darauf befindlichen Lagergüter in ein Höhenraster einzuordnen.

Das Bediengerät kann ausgebildet sein, über eine Schnittstelle, vorzugsweise ein Aktivierungsmechanismus des Bediengeräts, einen Mechanismus an einem jeweiligen Lagergutträger zu betätigen, um die Träger-Abstützelemente des jeweiligen Lagergutträgers gegenüber einem Grundkörper des jeweiligen Lagergutträgers zu bewegen, wobei die Träger-Abstützelemente vorzugsweise in eine erste Anordnung und/oder in eine zweite Anordnung gebracht werden. Alternativ oder bevorzugt kann das Bediengerät ausgebildet sein, einen jeweiligen Lagergutträger zur Abstützung in einem jeweiligen der Schächte in einer horizontalen Ebene zu verdrehen (um eine Vertikalachse, bevorzugt um die Vertikalmittelachse des jeweiligen Lagergutträgers) und vorzugsweise abzustellen, weiter bevorzugt um den jeweiligen Lagergutträger in eine nicht-abgestützte und/oder in eine abgestützte Anordnung zu bringen. Alternativ oder bevorzugt kann das Bediengerät ausgebildet sein, einen jeweiligen Lagergutträger zur Abstützung in einem jeweiligen der Schächte in einer horizontalen Ebene seitlich zu verschieben und vorzugsweise abzustellen, weiter bevorzugt um den jeweiligen Lagergutträger in eine nicht-abgestützte und/oder in eine abgestützte Anordnung zu bringen.

Bevorzugt kann das Bediengerät dazu ausgebildet sein, über die Schnittstelle eine Kraft vom Bediengerät auf den Mechanismus des jeweiligen Lagergutträgers zu übertragen.

Ein vierter Aspekt der vorliegenden Erfindung betrifft ein Verfahren zur Einlagerung einer Mehrzahl von Lagergutträgern in ein Warenlagersystem mit einer Mehrzahl von vorzugsweise vertikalen Schächten, einer Steuerung und mindestens einem Bediengerät, wobei das Warenlagersystem bevorzugt ein Warenlagersystem nach dem ersten Aspekt der Erfindung ist, wobei das Verfahren die Schritte aufweist:
a. Bestimmung einer Gesamthöhe eines einzulagernden Lagergutträgers aus der Mehrzahl von Lagergutträgern;
b. Auswahl eines bestimmten Schachts aus der Mehrzahl von Schächten, in welchen der einzulagernde Lagergutträger eingelagert werden soll;
c. Auswahl einerZielposition im ausgewählten Schacht aus einer Mehrzahl von vertikalen Abstütz-Positionen, die in jedem Schacht definierbar sind, wobei
   die Zielposition abhängig von der in Schritt a. bestimmten Gesamthöhe ausgewählt wird, und/oder
   die Zielposition abhängig von einer Gesamthöhe mindestes eines im ausgewählten Schacht befindlichen Lagergutträgers inklusive eines oder mehrerer gegebenenfalls darauf befindlichen Lagergüter ausgewählt wird; und/oder
   die Zielposition abhängig von zumindest einer Abstütz-Position eines oder mehrerer anderer im ausgewählten Schacht befindlicher Lagergutträger ausgewählt wird;
d. Einlagerung des einzulagernden Lagergutträgers an der Zielposition durch Abstützung des einzulagernden Lagergutträgers im in Schritt b. ausgewählten Schacht.

In anderen Worten kann der vierte Aspekt der Erfindung einerseits ein Verfahren zur Einlagerung einer Mehrzahl von Lagergutträgern in ein Warenlagersystem mit einer Mehrzahl von vorzugsweise vertikalen Schächten, einer Steuerung und mindestens einem Bediengerät umfassen, wobei das Warenlagersystem bevorzugt ein Warenlagersystem nach dem ersten Aspekt der Erfindung ist, wobei das Einlagern von unten in die Schächte erfolgt, wobei das Verfahren die Schritte aufweist:
a. Bestimmung einer Gesamthöhe eines einzulagernden Lagergutträgers aus der Mehrzahl von Lagergutträgern;
b. Auswahl eines bestimmten Schachts aus der Mehrzahl von Schächten, in welchen der einzulagernde Lagergutträger eingelagert werden soll;
c. Auswahl einer Ziel position im ausgewählten Schacht aus einer Mehrzahl von vertikalen Abstütz-Positionen, die in jedem Schacht definierbar sind, wobei die Zielposition abhängig von der in Schritt a. bestimmten Gesamthöhe ausgewählt wird, und/oder die Zielposition abhängig von der Abstütz-Position des zuletzt in dem bestimmten Schacht eingelagerten Lagergutträgers ausgewählt wird;
d. Einlagerung des einzulagernden Lagergutträgers an der Zielposition durch Abstützung des einzulagernden Lagergutträgers im ausgewählten Schacht.

Andererseits kann der vierte Aspekt der vorliegenden Erfindung ein Verfahren zur Einlagerung von Lagergut in ein Warenlagersystem mit einer Mehrzahl von vertikalen Schächten, einer Steuerung und mindestens einem Bediengerät umfassen, wobei das Warenlagersystem bevorzugt ein Warenlagersystem nach dem ersten Aspekt der Erfindung ist, wobei das Einlagern von oben in die Schächte erfolgt, wobei das Verfahren die Schritte aufweist:
a. Bestimmung einer Gesamthöhe eines einzulagernden Lagergutträgers aus der Mehrzahl von Lagergutträgern;
b. Auswahl eines bestimmten Schachts aus der Mehrzahl von Schächten, in welchen der einzulagernde Lagergutträger eingelagert werden soll;
c. Auswahl einerZielposition im ausgewählten Schacht aus einer Mehrzahl von vertikalen Abstütz-Positionen, die in jedem Schacht definierbar sind, wobei die Zielposition abhängig von der Abstütz-Position und/oder der Gesamthöhe des zuletzt in dem bestimmten Schacht eingelagerten Lagergutträgers ausgewählt wird;
d. Einlagerung des einzulagernden Lagergutträgers an der Zielposition durch Abstützung des einzulagernden Lagergutträgers im ausgewählten Schacht.

Der Schritt a. des Verfahrens kann vorzugsweise umfassen:
Bestimmung der Höhe des einzulagernden Lagergutträgers, einer Höhe von auf dem einzulagernden Lagergutträger befindlichem Lagergut, und/oder einer Gesamthöhe des einzulagernden Lagergutträgers inklusive eines oder mehrerer gegebenenfalls darauf befindlichen Lagergüter; und/oder
Einordnung der Höhe des einzulagernden Lagergutträgers, der Höhe von auf dem einzulagernden Lagergutträger befindlichem Lagergut und/oder der Gesamthöhe des einzulagernden Lagergutträgers inklusive eines oder mehrerer gegebenenfalls darauf befindlicher Lagergüter in in ein vordefiniertes Höhenraster.

Schritt d. des Verfahrens kann vorzugsweise umfassen: Transport des einzulagernden Lagergutträgers zum ausgewählten Schacht und Einbringen des einzulagernden Lagergutträgers von unten und/oder oben in den ausgewählten Schacht und Abstützung des einzulagernden Lagergutträgers an der ausgewählten Zielposition im Schacht, bevorzugt mittels eines Bediengeräts nach dem dritten Aspekt des Erfindung, weiter bevorzugt durch Verschieben und vorzugsweise Abstellen und/oder Verdrehen und vorzugsweise Abstellen des Lagergutträgers. In anderen Worten bzw. alternativ kann die Abstützung des einzulagernden Lagergutträgers an der ausgewählten Zielposition im Schacht vorzugsweise formschlüssig, kraftschlüssig und/oder mittels magnetischer Kräfte erfolgen. Anders ausgedrückt kann Schritt d. vorzugsweise umfassen:
seitliches Verschieben des einzulagernden Lagergutträgers in einer horizontalen Ebene und vorzugsweise Abstellen des einzulagernden Lagergutträgers auf einer Abstellfläche; und/oder
Verdrehen des einzulagernden Lagergutträgers in einer horizontalen Ebene, vorzugsweise um eine Vertikalmittelachse des einzulagernden Lagergutträgers und/oder des ausgewählten Schachts und vorzugsweise Abstellen des einzulagernden Lagergutträgers auf einer Abstellfläche.

Im Rahmen des Verfahrens ist der Lagergutträger vorzugsweise ein Lagergutträger nach dem zweiten Aspekt der Erfindung.

Die Zielposition in Schritt c. wird bevorzugt ausgewählt, sodass der einzulagernde Lagergutträger inklusive eines oder mehrerer gegebenenfalls darauf befindlicher Lagergüter zu einem unmittelbar vertikal benachbart in dem bestimmten Schacht befindlichen Lagergutträger inklusive eines oder mehrerer gegebenenfalls darauf befindlicher Lagergüter einen vertikalen Abstand von mindestens 0 mm, bevorzugt mindestens 5 mm, weiter bevorzugt mindestens 10 mm und/oder maximal 300 mm, bevorzugt maximal 120 mm, weiter bevorzugt maximal 60 mm aufweist.

Bevorzugt weist jeder Schacht an seiner Mehrzahl von Abstützpositionen Schacht-Abstützelemente, d.h. Klemmflächen und/oder eine Mehrzahl von Finnen, horizontale Abstütz-, Abstell-, Halte-, Auflageflächen, Nuten, Ausbrüche, Aussparungen, Bohrungen,Bolzen, Haken und/oder Stiften auf, an denen der einzulagernde Lagergutträger abstützbar ist, wobei die Schacht-Abstützelemente (insbesondere sofern die Schacht-Abstützelemente gebildet sind durch eine Mehrzahl von Finnen, Abstütz-, Abstell-, Halte-, Auflageflächen, Nuten, Bohrungen, Bolzen, Haken und/oder Stiften) bevorzugt in gleichmäßigen vertikalen Abständen angeordnet sind. Die Abstände betragen bevorzugt mindestens 10 mm, weiter bevorzugt mindestens 20 mm und/oder maximal 500 mm, weiter bevorzugt maximal 200 mm. Vorzugsweise sind die Schacht-Abstützelemente an mindestens zwei, bevorzugt diagonal gegenüberliegenden, Eckpfeilern und/oder Seitenwänden eines jeden Schachts ausgebildet.

Vorzugsweise kann auch mindestens ein Lagergutträger aus der Mehrzahl von Lagergutträgern, bevorzugt jeder Lagergutträger, ein oder mehrere Träger-Abstützelemente aufweisen. Die Träger-Abstützelemente sind bevorzugt Abstütz-, Abstell-, Halte-, oder Abstellflächen, Klemmbacken, Klappen, Stützdorne oder Stifte. In Schritt d. wird der Lagergutträger vorzugsweise über die Träger-Abstützelemente abgestützt.

Bevorzugt sind die Lagergutträger ausgebildet, zur Abstützung des mindestens einen Lagergutträgers von einer nicht-abgestützten Anordnung in eine abgestützte Anordnung überführt zu werden, weiter bevorzugt durch Verdrehen und vorzugsweise Abstellen und/oder durch horizontales Verschieben und vorzugsweise Abstellen des Lagergutträgers bevorzugt in die den Schacht begrenzenden Stützen. Vorzugsweise wird der Lagergutträger in der abgestützten Anordnung vertikal im Schacht gehalten und/oder der Lagergutträger ist in der nicht-abgestützten Anordnung durch den Schacht, vorzugsweise vertikal, transportierbar. Alternativ und/oder zusätzlich können die Träger-Abstützelemente ausgebildet sein, zur Abstützung des Lagergutträgers von einer ersten Anordnung in eine zweite Anordnung überführt zu werden, vorzugsweise wobei der Lagergutträger mit den Träger-Abstützelementen in der zweiten Anordnung vertikal im Schacht gehalten wird und/oder wobei der Lagergutträger mit den Träger-Abstützelementen in der ersten Anordnung (vertikal) durch den Schacht transportierbar ist. Die Träger-Abstützelemente können in die erste Anordnung oder in die zweite Anordnung vorgespannt sein. Der Lagergutträger kann einen Mechanismus aufweisen, um die Träger-Abstützelemente in die erste bzw. zweite Anordnung zu bringen.

In Schritt d. kann das Verfahren ferner aufweisen: Bewegen der Träger-Abstützelemente von der ersten Anordnung in die zweite Anordnung durch Betätigung des Mechanismus, vorzugsweise durch das Bediengerät, wobei das Bediengerät vorzugsweise ein Bediengerät nach dem dritten Aspekt der Erfindung ist.

Die Erfindung betrifft ferner ein Verfahren zur Einlagerung einer Mehrzahl von Lagergutträgern in ein Warenlagersystem mit einer Mehrzahl von vertikalen Schächten und mindestens einem Bediengerät, wobei das Warenlagersystem bevorzugt ein Warenlagersystem nach dem ersten Aspekt der Erfindung ist, wobei das Verfahren die Schritte aufweist:
a. Auswahl eines einzulagernden Lagergutträgers aus der Mehrzahl von Lagergutt räge rn;
b. Auswahl eines Schachts aus der Mehrzahl von Schächten, in den der Lagergutträger eingelagert werden soll;
c. Einbringen des einzulagernden Lagergutträgers in den ausgewählten Schacht, vorzugsweise mittels des Bediengeräts, wobei das Bediengerät bevorzugt ein Bediengerät nach dem dritten Aspekt der Erfindung ist;
d. Überführen des einzulagernden Lagergutträgers im Schacht von einer nicht-abgestützten Anordnung in eine abgestützte Anordnung, wobei sich eine Außenkontur des Lagergutträgers in der nicht-abgestützten Anordnung bevorzugt komplett in einem Freiraum des Schachtes befindet und der Lagergutträger somit vertikal durch den Schacht transportierbar ist und Bereiche der Außenkontur des Lagergutträgers in der abgestützten Anordnung in einer Draufsicht bevorzugt in eine Randkontur des Schachts, insbesondere in mindestens einen, den Schacht begrenzenden, Pfeiler und/oder Seitenwand ragen und der Lagergutträger somit abgestützt wird, wobei das Überführen des einzulagernden Lagergutträgers von der nicht-abgestützten Anordnung in die abgestützte Anordnung vorzugsweise erfolgt durch:
   Verdrehen des einzulagernden Lagergutträgers, vorzugsweise in einer horizontalen Ebene, vorzugsweise durch Drehung um eine Vertikalmittelachse des Lagergutträgers und/oder des Schachts, bevorzugt mittels des Bediengeräts und/oder
   Verschieben des einzulagernden Lagergutträgers, vorzugsweise in einer horizontalen Ebene, bevorzugt mittels des Bediengeräts.
e. Abstellen des einzulagernden Lagergutträgers auf einer Abstellfläche des ausgewählten Schachts.

Das Einbringen des einzulagernden Lagergutträgers in den ausgewählten Schacht in Schritt c. kann durch ein Einbringen des Lagergutträgers von oben oder von unten in den Schacht erfolgen.

Wie für den Fachmann ersichtlich ist, können Merkmale, welche mit Bezug auf den vierten Aspekt der Erfindung beschrieben sind, auch auf dieses Verfahren übertragen werden.

Mittels derartigen Verfahren kann ein Warenlagersystem betrieben werden, wobei der Betrieb insbesondere hinsichtlich Lagerdichte und/oder Flexibilität des Lagers optimiert sein kann.

Bevorzugt ist die Erfindung auf alle Prozesse vom Eingang der Ware über die Lagerung, Lagerverwaltung, der Auftragskommissionierung bis hin zum Ausgang der Ware aus dem System anwendbar. Sie ist bevorzugt sowohl im Bereich der Splitcase-Kommissionierung, wie auch in der Fullcase-Kommissionierung anwendbar. Im Vergleich zum herkömmlichen Blocklager werden die Lagergutträger nicht aufeinander gestapelt. Der Lagergutträger kann stattdessen selbst in einer entsprechenden Abstützposition abgestützt werden, verfügt also über eine Selbsthaltefunktion bzw. Abstützfunktion, welche an einer gewünschten Position im Schacht aktiviert (z.B. durch horizontales Verschieben und Abstellen oder durch Verdrehen und Abstellen des Lagergutträgers) werden kann. Die Lagergutträger mit Lagergut können somit entsprechend der tatsächlichen Ladungshöhe flexibel gelagert werden und müssen nicht gestapelt werden. Dadurch kann auch verschiedene Ware wie beispielsweise Kartons, Behälter, Trays, etc. auf dem Lagergutträger raumoptimiert im Blocklager gelagert werden. Ebenso ist eine Lagerung von Paletten möglich.

Die Erfindung betrifft ferner die folgenden Aspekte:
1. Warenlagersystem mit einer Mehrzahl von vertikalen Schächten, einer Steuerung, einer Mehrzahl von Lagergutträgern und mindestens einem Bediengerät, wobei
   die Lagergutträger in jedem der Schächte an einer Mehrzahl von vertikal beabstandeten Abstütz-Positionen abstützbar sind;
   das mindestens eine Bediengerät ausgebildet ist, jeweils mindestens einen einzulagernden Lagergutträger außerhalb der Schächte zu verfahren und von außen in einen ausgewählten Schacht einzubringen;
   die Steuerung ausgebildet ist, eine Abstützung des mindestens einen einzulagernden Lagergutträgers an einer Zielposition im ausgewählten Schacht zu veranlassen, wobei die Steuerung die Zielposition aus der Mehrzahl vertikaler Abstütz-Positionen auswählt, abhängig:
      von einer Gesamthöhe des einzulagernden Lagergutträgers inklusive eines oder mehrerer gegebenenfalls darauf befindlichen Lagergüter, und/oder
      von einer Gesamthöhe mindestes eines im ausgewählten Schacht befindlichen Lagergutträgers inklusive eines oder mehrerer gegebenenfalls darauf befindlichen Lagergüter.
2. Warenlagersystem nach Aspekt 1, wobei die Steuerung die Zielposition aus der Mehrzahl vertikaler Abstütz-Positionen auswählt, abhängig von der Abstütz-Position eines oder mehrerer anderer im ausgewählten Schacht befindlicher Lagergutträger.
3. Warenlagersystem nach Aspekt 1 oder 2, wobei die Mehrzahl vertikal beabstandeter Abstütz-Positionen jeweils auf gegenüberliegenden Seiten und/oder in gegenüberliegenden Ecken der Schächte ausgebildet ist; und/oder wobei die Abstützung an der Zielposition auf gegenüberliegenden Seiten und/oder in gegenüberliegenden Ecken des ausgewählten Schachts erfolgt, vorzugsweise wobei mindestens zwei gegenüberliegende Abstütz-Positionen in einer gemeinsamen horizontalen Ebene oder in zwei parallelen Ebenen liegen.
4. Warenlagersystem nach einem der vorstehenden Aspekte, wobei die Abstützung des Lagergutträgers kraftschlüssig, formschlüssig, und/oder mittels magnetischer Kräfte erfolgt.
5. Warenlagersystem nach einem der vorstehenden Aspekte, wobei der einzulagernde Lagergutträger im ausgewählten Schacht von einer abgestützten Anordnung in eine nicht-abgestützte Anordnung überführbar ist, vorzugsweise durch Verdrehen und/oder horizontales Verschieben des einzulagernden Lagergutträgers im ausgewählten Schacht, bevorzugt mittels des Bediengeräts, wobei sich eine Außenkontur des einzulagernden Lagergutträgers in der nicht-abgestützten Anordnung bevorzugt komplett in einem Freiraum des ausgewählten Schachts befindet und der einzulagernde Lagergutträger somit vertikal transportierbar ist und Bereiche der Außenkontur des einzulagernden Lagergutträgers in der abgestützten Anordnung in einer Draufsicht bevorzugt in mindestens einen, den ausgewählten Schacht begrenzenden, Pfeiler und/oder Seitenwand ragen und der einzulagernde Lagergutträger somit abgestützt wird.
6. Warenlagersystem nach einem der vorstehenden Aspekte, wobei die Lagergutträger jeweils mindestens zwei Träger-Abstützelemente aufweisen, vorzugsweise wobei die Träger-Abstützelemente an gegenüberliegende Seiten und/oder an diagonal gegenüberliegenden Kanten bzw. Ecken des jeweiligen Lagergutträgers angeordnet sind.
7. Warenlagersystem nach Aspekt 6, wobei die Lagergutträger eine horizontale Grundfläche aufweisen, vorzugsweise wobei die Träger-Abstützelemente an gegenüberliegenden Seiten der Grundfläche vorgesehen sind.
8. Warenlagersystem nach Aspekt 6 oder 7, wobei die Träger-Abstützelemente ausgebildet sind, den einen jeweiligen Lagergutträger in einem jeweiligen der Schächte gegen horizontales Verschieben und/oder gegen ein Verdrehen um eine Vertikalmittelachse des jeweiligen Schachts und/oder des jeweiligen Lagergutträgers zu sichern, wenn der jeweilige Lagergutträger an der Zielposition im jeweiligen Schacht abgestützt ist.
9. Warenlagersystem nach Aspekt 6 oder 7, wobei die Träger-Abstützelemente gegenüber dem Grundkörper des Lagergutträgers beweglich sind und ausgebildet sind, zur Abstützung des jeweiligen Lagergutträgers von einer ersten Anordnung in eine zweite Anordnung überführt zu werden, wobei die Überführung durch Bewegen der Träger-Abstützelemente gegenüber dem Grundkörper erfolgt, vorzugsweise wobei der jeweilige Lagergutträger, wenn die Träger-Abstützelemente in der zweiten Anordnung sind, vertikal in einem jeweiligen der Schächte gehalten wird und/oder wobei der jeweilige Lagergutträger, wenn die Träger-Abstützelemente in der ersten Anordnung sind, durch den jeweiligen Schacht transportierbar ist.
10. Warenlagersystem nach Aspekt 9,
   wobei eine horizontale Ausdehnung des Lagergutträgers mit den Träger-Abstützelementen in der zweiten Anordnung größer ist als mit den Träger-Abstützelementen in der ersten Anordnung; und/oder
   wobei die Träger-Abstützelemente in der zweiten Anordnung seitlich weiter vom jeweiligen Lagergutträger als in der ersten Anordnung hervorstehen.
11. Warenlagersystem nach einem der Aspekte 6-10, wobei die Träger-Abstützelemente Abstellflächen, Nuten, Aussparungen, Klemmbacken, Klappen, Stützdorne und/oder Stifte sind.
12. Warenlagersystem nach einem der Aspekte 6 bis 9, wobei die Träger-Abstützelemente Zahnräder oder Ritzel sind.
13. Warenlagersystem nach Aspekt 12, wobei jeder Schacht mindestens eine Zahnstange aufweist, welche sich vertikal im Schacht erstreckt.
14. Warenlagersystem nach Aspekt 13,
   wobei die Träger-Abstützelemente mit der Zahnstange eingreifen und in der ersten Anordnung an der Zahnstange entlang abrollen; und/oder
   wobei in der zweiten Anordnung eine Rotation der Träger-Abstützelemente in zumindest einer Richtung blockiert ist, sodass der Eingriff der Träger-Abstützelemente mit der Zahnstange eine vertikale Bewegung des jeweiligen Lagergutträgers verhindert.
15. Warenlagersystem nach einem der Aspekte 1-14, wobei das Bediengerät ausgebildet ist,
   die Träger-Abstützelemente in die erste Anordnung und/oder in die zweite Anordnung zu bringen; und/oder
   einen Lagergutträger in einer horizontalen Ebene zu verschieben und/oder zu verdrehen, vorzugsweise um eine Vertikalmittelachse des Lagergutträgers.
16. Warenlagersystem nach einem der Aspekte 9-15, wobei mindestens einer der Lagergutträger einen Mechanismus aufweist, um die Träger-Abstützelemente in die erste Anordnung und/oder in die zweite Anordnung zu bringen, vorzugsweise wobei das Bediengerät und/oder die Steuerung ausgebildet ist, den Mechanismus zu betätigen, stärker bevorzugt durch Übertragung einer Kraft vom Bediengerät auf den Mechanismus, vorzugsweise wobei das Bediengerät einen Aktivierungsmechanismus aufweist, um den Mechanismus des Lagergutträgers zu betätigen.
17. Warenlagersystem nach einem der Aspekte 9-16, wobei die Träger-Abstützelemente in die erste Anordnung oder in die zweite Anordnung vorgespannt sind.
18. Warenlagersystem nach einem der vorstehenden Aspekte, wobei jeder Schacht Klemmflächen und/oder eine Mehrzahl von Finnen, horizontalen Abstütz-, Abstell-, Auflage- oder Halteflächen, Nuten, Ausbrüchen, Aussparungen, Bohrungen, Bolzen, Haken und/oder Stiften aufweist, an denen die Lagergutträger abstützbar sind, wobei die Mehrzahl von Finnen, horizontalen Abstütz-, Abstell-, Auflage- oder Halteflächen, Nuten, Ausbrüchen, Aussparungen, Bohrungen, Bolzen, Haken und/oder Stiften bevorzugt in gleichmäßigen vertikalen Abständen angeordnet sind, wobei die Abstände bevorzugt mindestens 10 mm, weiter bevorzugt mindestens 20 mm und/oder maximal 500 mm, weiter bevorzugt maximal 200 mm betragen, und wobei vorzugsweise die Klemmflächen und/oder die Mehrzahl von Finnen, horizontalen Abstütz-, Abstell-, Auflage- oder Halteflächen, Nuten, Ausbrüchen, Aussparungen, Bohrungen, Bolzen, Haken und/oder Stiften an mindestens zwei Pfeilern und/oder Seitenwänden des Schachts ausgebildet sind.
19. Warenlagersystem nach einem der vorstehenden Aspekte, wobei die Schächte in einem Raster angeordnet sind; und/oder
   wobei jeder Schacht definiert ist durch mindestens zwei, bevorzugt vier, Pfeiler; und/oder
   wobei jeder Schacht definiert ist durch mindestens zwei, bevorzugt vier, Seitenwände, und/oder
   wobei jeder Schacht definiert ist durch einen Freiraum zwischen den den Schacht begrenzende Seitenwände und/oder Pfeiler, vorzugsweise ein Freiraum, in welchem der einzulagernde Lagergutträger vertikal verfahrbar ist und welcher eine horizontale Grundfläche aufweist, welche vorzugsweise maximal 120 % einer horizontalen Projektion des einzulagernden Lagergutträgers beträgt.
20. Warenlagersystem nach einem der vorstehenden Aspekte, wobei jeder Schacht als Eckpfeiler ausgebildete Pfeiler aufweist und eine Mehrzahl der Eckpfeiler als Eckpfeiler für vier angrenzende Schächte dient.
21. Warenlagersystem nach einem der vorstehenden Aspekte, wobei die Schächte einen lichten Querschnitt zwischen 0,12 m² und 2,3 m², bevorzugt zwischen 0,24 m² und 1,44 m² aufweisen.
22. Warenlagersystem nach einem der vorstehenden Aspekte, wobei die Schächte eine Höhe von mindestens 0,5 m, bevorzugt mindestens 4 m, weiter bevorzugt mindestens 8 m, weiter bevorzugt mindestens 12 m, weiter bevorzugt mindestens 30 m aufweisen, wobei die Schächte bevorzugt in einem Warenlagersegment mit mindestens 12 Schächten gleich groß sind; und/oder
   wobei das Warenlagersystem mindestens 4, vorzugsweise mindestens 60, weiter bevorzugt mindestens 100 Schächte aufweist.
23. Warenlagersystem nach einem der vorstehenden Aspekte, wobei die Schächte und/oder das Bediengerät ausgebildet sind, die Lagergutträger von oben und/oder von unten in die Schächte einzubringen.
24. Warenlagersystem nach einem der vorstehenden Aspekte, wobei das Warenlagersystem ferner mindestens eine Vermessungseinheit und/oder Sensorik aufweist, die ausgebildet ist,
   eine Höhe des einzulagernden Lagergutträgers, eine Höhe von auf dem einzulagernden Lagergutträger befindlichen Lagerguts und/oder die Gesamthöhe des einzulagernden Lagergutträgers inklusive eines oder mehrerer gegebenenfalls darauf befindlichen Lagergüter festzustellen; und/oder
   den einzulagernden Lagergutträger inklusive eines oder mehrerer gegebenenfalls darauf befindlichen Lagergüter und/oder das auf dem einzulagernden Lagergutträger befindliche Lagergut in ein Höhenraster einzuordnen.
25. Warenlagersystem nach Aspekt 24, wobei das Bediengerät die mindestens eine Vermessungseinheit und/oder die Sensorik aufweist.
26. Warenlagersystem nach einem der vorstehenden Aspekte, wobei das Bediengerät ausgebildet ist, mindestens einen Lagergutträger aufzunehmen und den aufgenommenen Lagergutträger von oben und/oder von unten in einen der Schächte einzubringen.
27. Warenlagersystem nach einem der vorstehenden Aspekte, wobei das Bediengerät ausgebildet ist über den Schächten und/oder unter den Schächten und/oder außerhalb der Schächte zu verfahren.
28. Warenlagersystem nach einem der vorstehenden Aspekte, wobei das Bediengerät ein Flurförderzeug, bevorzugt ein fahrerloses Transportfahrzeug, FTF, ein schienengeführtes Fahrzeug, ein Autonome Mobile Robot, AMR, ein Automated Guided Vehicle, AGV, oder ein Raumportal ist.
29. Lagergutträger für ein Warenlagersystem nach einem der vorstehenden Aspekte.
30. Lagergutträger für ein Warenlagersystem mit einer Mehrzahl von vertikalen Schächten, einer Steuerung und mindestens einem Bediengerät, wobei
   der Lagergutträger in jedem der Schächte an einer Mehrzahl von vertikal beabstandeten Abstütz-Positionen abstützbar ist;
   der Lagergutträger dazu ausgebildet ist, von dem mindestens einen Bediengerät von oben und/oder unten in einen der Schächte eingebracht zu werden;
   wobei:
      der Lagergutträger mindestens zwei Träger-Abstützelemente aufweist, die gegenüber einem Grundkörper des Lagergutträgers beweglich sind und dazu ausgebildet sind, zur Abstützung des jeweiligen Lagergutträgers von einer ersten Anordnung in eine zweite Anordnung überführt zu werden, wobei die Überführung vorzugsweise durch Bewegen der Träger-Abstützelemente gegenüber dem Grundkörper erfolgt, wobei der Lagergutträger mit den Träger-Abstützelementen in der zweiten Anordnung vertikal im Schacht gehalten wird und/oder wobei der Lagergutträger mit den Träger-Abstützelementen in der ersten Anordnung durch den Schacht transportierbar ist.
31. Lagergutträger nach Aspekt 30, wobei der Lagergutträger einen Mechanismus aufweist, um die Träger-Abstützelemente in die erste Anordnung und/oder in die zweite Anordnung zu bringen, vorzugsweise wobei der Mechanismus ausgebildet ist, über das Bediengerät und/oder die Steuerung betätigt zu werden, weiter bevorzugt durch Übertragung einer Kraft vom Bediengerät auf den Mechanismus.
32. Lagergutträger nach Aspekt 31, wobei der Lagergutträger eine mechanische Schnittstelle aufweist, über die das Bediengerät den Mechanismus betätigt.
33. Lagergutträger nach einem der Aspekte 30-32, wobei die Träger-Abstützelemente in die erste Anordnung oder in die zweite Anordnung vorgespannt sind.
34. Lagergutträger nach einem der Aspekte 30-33, wobei der Lagergutträger dafür ausgelegt ist, eine Last von mindestens 0,5 kg, bevorzugt mindestens 25 kg, weiter bevorzugt mindestens 50 kg, weiter bevorzugt mindestens 100 kg, weiter bevorzugt mindestens 200 kg zu tragen und/oder eine Last von maximal 30 kg, weiter bevorzugt maximal 200 kg, weiter bevorzugt maximal 500 kg, weiter bevorzugt maximal 1000 kg, weiter bevorzugt maximal 1500kg zu tragen.
35. Lagergutträger nach einem der Aspekte 30-34, wobei der Lagergutträger eine viereckige Grundfläche hat, bevorzugt mindestens 150 mm × 100 mm, weiter bevorzugt mindestens 300 mm × 200 mm, weiter bevorzugt mindestens 600 mm × 400 mm und/oder bevorzugt maximal 1400 mm × 1400 mm, weiter bevorzugt maximal 1000 mm × 1000 mm, weiter bevorzugt maximal 600 mm × 600 mm.
36. Lagergutträger nach einem der Aspekte 30-35, wobei die Träger-Abstützelemente an gegenüberliegenden Seiten und/oder gegenüberliegenden Ecken des Lagergutträgers vorgesehen sind, vorzugsweise an gegenüberliegenden Seiten und/oder gegenüberliegenden Ecken einer Grundfläche des Lagergutträgers, wobei die Grundfläche vorzugsweise horizontal ist.
37. Lagergutträger nach einem der Aspekte 30-36,
   wobei eine horizontale Ausdehnung des Lagergutträgers mit den Träger-Abstützelementen in der zweiten Anordnung größer ist als mit den Träger-Abstützelementen in der ersten Anordnung; und/oder
   wobei die Träger-Abstützelemente in der zweiten Anordnung seitlich weiter vom jeweiligen Lagergutträger als in der ersten Anordnung hervorstehen.
38. Lagergutträger nach einem der Aspekte 30-37, wobei die Träger-Abstützelemente Nuten, Aussparungen, Klemmbacken, Klappen, Stützdorne und/oder Stifte sind.
39. Lagergutträger nach einem der Aspekte 30-38, wobei die Träger-Abstützelemente als nach außen klappbare Seitenwände des Lagergutträgers ausgebildet sind.
40. Lagergutträger nach einem der Aspekte 30-36, wobei die Träger-Abstützelemente Zahnräder oder Ritzel sind.
41. Bediengerät für ein Warenlagersystem nach einem der Aspekte 1-28.
42. Bediengerät für ein Warenlagersystem mit einer Mehrzahl von vertikalen Schächten, einer Steuerung und einer Mehrzahl von Lagergutträgern, wobei die Lagergutträger und Schächte zur Abstützung der Lagergutträger an einer Mehrzahl vertikal beabstandeter Abstütz-Positionen in einem jeweiligen der Schächte ausgebildet sind,
   wobei das Bediengerät ausgebildet ist, jeweils mindestens einen einzulagernden Lagergutträger außerhalb der Schächte zu verfahren und von außen, vorzugsweise von oben und/oder unten, in einen der Schächte einzubringen;
   wobei das Bediengerät ausgebildet ist, eine Anweisung der Steuerung zu empfangen und die Lagergutträger an einer durch die Steuerung aus der Mehrzahl von Abstütz-Positionen ausgewählten Abstütz-Position abzustützen.
43. Bediengerät nach Aspekt 42, wobei das Bediengerät ausgebildet ist, außerhalb der Schächte, vorzugsweise über den Schächten und/oder unter den Schächten, zu verfahren.
44. Bediengerät nach Aspekt 42 oder 43, wobei das Bediengerät ausgebildet ist:
   über eine Schnittstelle, vorzugsweise ein Aktivierungsmechanismus, einen Mechanismus an einem jeweiligen Lagergutträger zu betätigen, um Träger-Abstützelemente des jeweiligen Lagergutträgers gegenüber einem Grundkörper des Lagergutträgers zu bewegen, wobei die Träger-Abstützelemente vorzugsweise in eine erste Anordnung und/oder in eine zweite Anordnung gebracht werden; und/oder einen jeweiligen Lagergutträger in einer horizontalen Ebene zu verdrehen, vorzugsweise um eine Vertikalmittelachse des jeweiligen Lagergutträgers, vorzugsweise um den jeweiligen Lagergutträger in eine nicht abgestützte und/oder in eine abgestützte Anordnung zu bringen; und/oder
   einen jeweiligen Lagergutträger in einer horizontalen Ebene seitlich zu verschieben, vorzugsweise um den jeweiligen Lagergutträger in eine nicht abgestützte und/oder in eine abgestützte Anordnung zu bringen.
45. Bediengerät nach Aspekt 44, wobei das Bediengerät dazu ausgebildet ist, über die Schnittstelle eine Kraft vom Bediengerät auf den Mechanismus des jeweiligen Lagergutträgers zu übertragen.
46. Bediengerät nach einem der Aspekte 44-45, wobei das Bediengerät ein Flurförderzeug, bevorzugt ein fahrerloses Transportfahrzeug, FTF, ein schienengeführtes Fahrzeug, ein Autonome Mobile Robot, AMR, ein Automated Guided Vehicle, AGV, oder ein Raumportal ist.
47. Bediengerät nach einem der Aspekte 44-46, wobei das Bediengerät ausgebildet ist, mindestens einen Lagergutträger aufzunehmen, wobei der Lagergutträger bevorzugt ein Lagergutträger nach einem der Aspekte 29-40 ist, und wobei das Bediengerät bevorzugt ferner ausgebildet ist,
   eine Höhe des aufgenommenen Lagergutträgers, eine Höhe von auf dem aufgenommenen Lagergutträger befindlichen Lagergut und/oder eine Gesamthöhe des aufgenommenen Lagergutträgers inklusive eines oder mehrerer gegebenenfalls darauf befindlichen Lagergüter festzustellen; und/oder
   die Höhe von auf dem aufgenommenen Lagergutträger befindlichem Lagergut und/oder die Gesamthöhe des aufgenommenen Lagergutträgers inklusive eines oder mehrerer gegebenenfalls darauf befindlichen Lagergüter in ein Höhenraster einzuordnen.
48. Verfahren zur Einlagerung einer Mehrzahl von Lagergutträgern in ein Warenlagersystem mit einer Mehrzahl von vertikalen Schächten, einer Steuerung und mindestens einem Bediengerät, wobei das Warenlagersystem bevorzugt ein Warenlagersystem nach einem der Aspekte 1-28 ist, wobei das Verfahren die Schritte aufweist:
   a. Bestimmung einer Gesamthöhe eines einzulagernden Lagergutträgers aus der Mehrzahl von Lagergutträgern;
   b. Auswahl eines bestimmten Schachts aus der Mehrzahl von Schächten, in welchen der einzulagernde Lagergutträger eingelagert werden soll;
   c. Auswahl einer Zielposition im ausgewählten Schacht aus einer Mehrzahl von vertikalen Abstütz-Positionen, die in jedem Schacht definierbar sind, wobei
      die Zielposition abhängig von der in Schritt a. bestimmten Gesamthöhe ausgewählt wird, und/oder
      die Zielposition abhängig von einer Gesamthöhe mindestes eines im ausgewählten Schacht befindlichen Lagergutträgers inklusive eines oder mehrerer gegebenenfalls darauf befindlichen Lagergüter ausgewählt wird; und/oder
      die Zielposition abhängig von zumindest einer Abstütz-Position eines oder mehrerer anderer im ausgewählten Schacht befindlicher Lagergutträger ausgewählt wird;
   d. Einlagerung des einzulagernden Lagergutträgers an der Zielposition durch Abstützung des einzulagernden Lagergutträgers im ausgewählten Schacht.
49. Verfahren nach Aspekt 48, wobei Schritt a. umfasst:
   Bestimmung einer Höhe des einzulagernden Lagergutträgers, einer Höhe von auf dem einzulagernden Lagergutträger befindlichem Lagergut und/oder einer Gesamthöhe des einzulagernden Lagergutträgers inklusive eines oder mehrerer gegebenenfalls darauf befindlicher Lagergüter; und/oder
   Einordnung der Höhe von auf dem einzulagernden Lagergutträger befindlichem Lagergut und/oder der Gesamthöhe des einzulagernden Lagergutträgers inklusive eines oder mehrerer gegebenenfalls darauf befindlicher Lagergüter in ein vordefiniertes Höhenraster.
50. Verfahren nach Aspekt 48 oder 49, wobei Schritt d. umfasst:
   Transport des einzulagernden Lagergutträgers zum ausgewählten Schacht und
   Einbringen des einzulagernden Lagergutträgers von unten und/oder oben in den ausgewählten Schacht und Abstützung des einzulagernden Lagergutträgers an der ausgewählten Zielposition im Schacht bevorzugt mittels eines Bediengeräts nach einem der Aspekte 41-47, weiter bevorzugt durch Verschieben und/oder Verdrehen des Lagergutträgers.
51. Verfahren nach einem der Aspekte 48-50, wobei Schritt d. umfasst:
   seitliches Verschieben des einzulagernden Lagergutträgers in einer horizontalen Ebene und vorzugsweise Abstellen des einzulagernden Lagergutträgers auf einer Abstellfläche; und/oder
   Verdrehen des einzulagernden Lagergutträgers in einer horizontalen Ebene, vorzugsweise um eine Vertikalmittelachse des einzulagernden Lagergutträgers und/oder des ausgewählten Schachts und vorzugsweise Abstellen des einzulagernden Lagergutträgers auf einer Abstellfläche.
52. Verfahren nach einem der Aspekte 48-51, wobei die Zielposition in Schritt c.
   ausgewählt wird, sodass der einzulagernde Lagergutträger inklusive eines oder mehrerer gegebenenfalls darauf befindlicher Lagergüter zu einem unmittelbar vertikal benachbart in dem bestimmten Schacht befindlichen Lagergutträger inklusive eines oder mehrerer gegebenenfalls darauf befindlicher Lagergüter einen vertikalen Abstand von mindestens 0 mm, bevorzugt mindestens 5 mm, weiter bevorzugt mindestens 10 mm und/oder maximal 300 mm, bevorzugt maximal 120 mm, weiter bevorzugt maximal 60 mm aufweist.
53. Verfahren nach einem der Aspekte 48-52, wobei jeder Schacht Klemmflächen und/oder eine Mehrzahl von Finnen, horizontale Abstütz-, Abstell-, Auflage- oder Halteflächen, Nuten, Ausbrüchen, Aussparungen, Bohrungen, Bolzen, Haken und/oder Stiften aufweist, an denen die Lagergutträger abstützbar sind, wobei die Mehrzahl von Finnen, Abstütz-, Abstell-, Auflage- oder Halteflächen, Nuten, Ausbrüchen, Aussparungen, Bohrungen, Bolzen, Haken und/oder Stiften bevorzugt in gleichmäßigen vertikalen Abständen angeordnet sind, wobei die Abstände bevorzugt mindestens 10 mm, weiter bevorzugt mindestens 20 mm und/oder maximal 500 mm, weiter bevorzugt maximal 200 mm betragen, und wobei vorzugsweise die Klemmflächen und/oder die Mehrzahl von Finnen, Abstütz-, Abstell-, Auflage- oder Halteflächen, Nuten, Ausbrüchen, Aussparungen, Bohrungen, Bolzen, Haken und/oder Stiften an mindestens zwei Pfeilern und/oder Seitenwänden des Schachts ausgebildet sind.
54. Verfahren nach einem der Aspekte 48-53, wobei der einzulagernde Lagergutträger ein oder mehrere Träger-Abstützelemente aufweist, wobei die Träger-Abstützelemente bevorzugt Abstütz- oder Abstellflächen, Klemmbacken, Klappen, Stützdorne oder Stifte sind und wobei in Schritt d. der Lagergutträger über die Träger-Abstützelemente abgestützt wird.
55. Verfahren nach Aspekt 54, wobei
   die Träger-Abstützelemente ausgebildet sind, zur Abstützung des Lagergutträgers von einer ersten Anordnung in eine zweite Anordnung überführt zu werden, wobei der Lagergutträger in der zweiten Anordnung vertikal im Schacht gehalten wird und/oder wobei der Lagergutträger in der ersten Anordnung durch den Schacht transportierbar ist;
   wobei der Lagergutträger einen Mechanismus aufweist, um die Träger-Abstützelemente in die erste Anordnung und/oder in die zweite Anordnung zu überführen, wobei die Überführung durch Bewegen der Träger-Abstützelemente gegenüber einem Grundkörper des Lagergutträgers erfolgt, vorzugsweise wobei das Bediengerät einen Aktivierungsmechanismus aufweist, um den Mechanismus des Lagergutträgers zu betätigen, vorzugsweise wobei die Träger-Abstützelemente in die erste Anordnung oder in die zweite Anordnung vorgespannt sind;
   wobei das Verfahren in Schritt d. ferner aufweist:
      Bewegen der Träger-Abstützelemente von der ersten Anordnung in die zweite Anordnung durch Betätigung des Mechanismus, vorzugsweise durch das Bediengerät, wobei das Bediengerät vorzugsweise ein Bediengerät nach einem der Aspekte 42-47 ist.
56. Verfahren nach einem der Aspekte 48-55, wobei der Lagergutträger ein Lagergutträger nach einem der Aspekte 29-40 ist
57. Verfahren zur Einlagerung einer Mehrzahl von Lagergutträgern in ein Warenlagersystem mit einer Mehrzahl von vertikalen Schächten und mindestens einem Bediengerät, wobei das Warenlagersystem bevorzugt ein Warenlagersystem nach einem der Aspekte 1-28 ist, wobei das Verfahren die Schritte aufweist:
   a. Auswahl eines einzulagernden Lagergutträgers aus der Mehrzahl von Lagergutträgern;
   b. Auswahl eines Schachts aus der Mehrzahl von Schächten, in den der Lagergutträger eingelagert werden soll;
   c. Einbringen des einzulagernden Lagergutträgers in den ausgewählten Schacht, vorzugsweise mittels des Bediengeräts, wobei das Bediengerät bevorzugt ein Bediengerät nach einem der Aspekte 42-47 ist;
   d. Überführen des einzulagernden Lagergutträgers im Schacht von einer nicht-abgestützten Anordnung in eine abgestützte Anordnung, wobei sich eine Außenkontur des Lagergutträgers in der nicht-abgestützten Anordnung bevorzugt komplett in einem Freiraum des Schachtes befindet und der Lagergutträger somit vertikal durch den Schacht transportierbar ist und Bereiche der Außenkontur des Lagergutträgers in der abgestützten Anordnung in einer Draufsicht bevorzugt in eine Randkontur des Schachts, insbesondere in mindestens einen, den Schacht begrenzenden, Pfeiler und/oder Seitenwand ragen und der Lagergutträger somit abgestützt wird, wobei das Überführen des einzulagernden Lagergutträgers von der nicht-abgestützten Anordnung in die abgestützte Anordnung vorzugsweise erfolgt durch:
      Verdrehen des einzulagernden Lagergutträgers, vorzugsweise in einer horizontalen Ebene, vorzugsweise durch Drehung um eine Vertikalmittelachse des Lagergutträgers und/oder des Schachts, bevorzugt mittels des Bediengeräts und/oder
      Verschieben des einzulagernden Lagergutträgers, vorzugsweise in einer horizontalen Ebene, bevorzugt mittels des Bediengeräts.
   e. Abstellen des einzulagernden Lagergutträgers auf einer Abstellfläche des ausgewählten Schachts.
58. Verfahren nach Aspekt 57, wobei das Einbringen des einzulagernden Lagergutträgers in den ausgewählten Schacht in Schritt c. durch ein Einbringen des Lagergutträgers von oben oder von unten in den Schacht erfolgt.

Die vorliegende Erfindung ist beispielhaft anhand der folgenden Figuren genauer erläutert. Die Figuren zeigen lediglich bevorzugte Ausführungsformen der Erfindung, ohne dass die Erfindung auf diese Ausführungsformen beschränkt ist. Es zeigen:
- Fig. 1A: eine Perspektivansicht eines Warenlagersystems der vorliegenden Erfindung in einer bevorzugten Ausführungsform;
- Fig. 1B: das Warenlagersystem aus Fig. 1A in einer Seitenansicht;
- Fig. 2: ein Bediengerät in einer ersten bevorzugten Ausführungsform;
- Fig. 3: ein Bediengerät in einer zweiten bevorzugten Ausführungsform;
- Fig. 4A: einen Schacht des Warenlagersystems aus Fig. 1A mit Lagergutträgern, welche teilweise mit Lagergut bestückt, sind in einer ersten bevorzugten Ausführungsform;
- Fig. 4B: eine Draufsicht auf einen Eckpfeiler zwischen vier Schächten mit Lagergutträgern in der ersten bevorzugten Ausführungsform;
- Fig. 5A: den Lagergutträger aus Fig. 4A;
- Fig. 5B: ein Detail des Lagergutträgers aus Fig. 5A in einer Seitenansicht;
- Fig. 6A-6D: einen Einlagerungsvorgang des Lagergutträgers aus Fig. 5 in den Schacht aus Fig. 4 gemäß einem bevorzugten Verfahren;
- Fig. 6E: eine Draufsicht auf den Einlagerungsvorgang gemäß Fig. 6B;
- Fig. 6F: eine Draufsicht nach abgeschlossenem Einlagerungsvorgang gemäß Fig. 6D;
- Fig. 7: einen Greifer des Bediengeräts aus Fig. 2 oder des Bediengeräts aus Fig. 3 in einer ersten bevorzugten Ausführungsform;
- Fig. 8: den Greifer aus Fig. 7 mit dem mit Lagergut bestückten Lagergutträger aus Fig. 4;
- Fig. 9: einen Lagergutträger in einer zweiten bevorzugten Ausführungsform;
- Fig. 10: ein Detail des Lagergutträgers aus Fig. 9 in einer Seitenansicht;
- Fig. 11A-11D: einen Einlagerungsvorgang des Lagergutträgers aus Fig. 9 in einen Schacht einer zweiten bevorzugten Ausführungsform;
- Fig. 11E: eine Draufsicht auf den Einlagerungsvorgang gemäß Fig. 11B;
- Fig. 11F: eine Draufsicht nach abgeschlossenem Einlagerungsvorgang gemäß Fig. 11D;
- Fig. 11G: ein Schacht der zweiten bevorzugten Ausführungsform mit eingelagerten Lagergutträgern
- Fig. 12: einen Greifer des Bediengeräts aus Fig. 2 oder des Bediengeräts aus Fig. 3 in einer zweiten bevorzugten Ausführungsform;
- Fig. 13A: den Greifer aus Fig. 12 mit dem mit Lagergut bestückten Lagergutträger aus Fig. 9;
- Fig. 13B: eine Draufsicht auf den Greifer aus Fig. 13A mit nicht aktivierter Dreheinheit;
- Fig. 13C: eine Draufsicht auf den Greifer aus Fig. 13A mit aktivierter Dreheinheit;
- Fig. 14: einen Schacht mit Lagergutträgern in einer dritten bevorzugten Ausführungsform;
- Fig. 15: den Lagergutträger aus Fig. 14;
- Fig. 16A-16B: einen Einlagerungsvorgang des Lagergutträgers aus Fig. 15 in den Schacht aus Fig. 14 gemäß einem bevorzugten Verfahren;
- Fig. 17: einen Greifer des Bediengeräts aus Fig. 2 oder des Bediengeräts aus Fig. 3 in einer dritten bevorzugten Ausführungsform mit dem mit Lagergut bestückten Lagergutträger aus Fig. 15;
- Fig. 18A-18D: ein Verfahren zur Aufnahme und Abgabe eines Lagergutträgers aus Fig. 15 mit dem Greifer aus Fig. 17; und
- Fig. 19A-C: Beispiele von Warenlagersystemen mit Schächten in bevorzugten Ausführungsformen in einer Draufsicht.

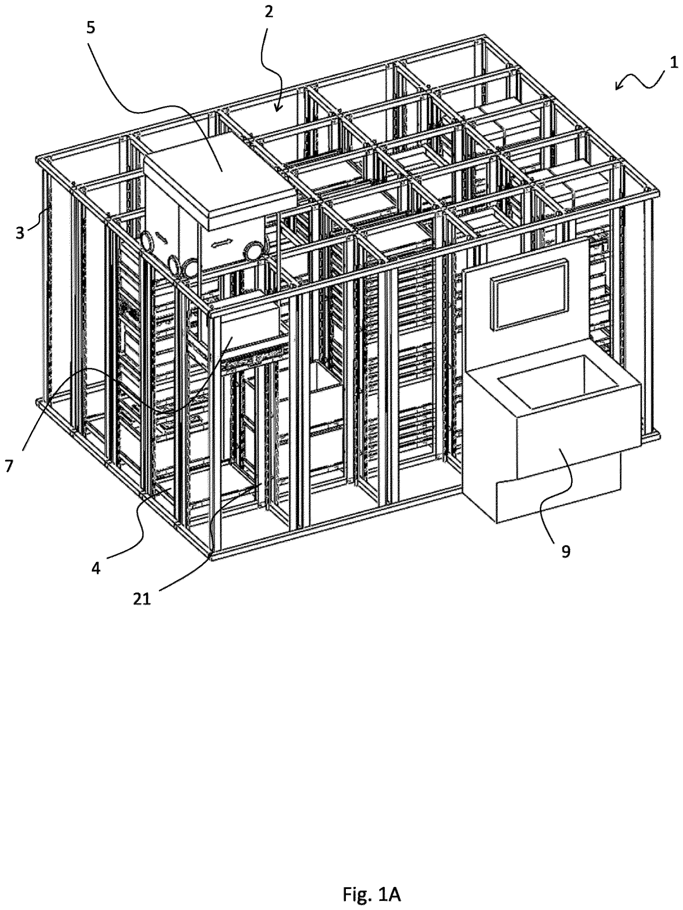

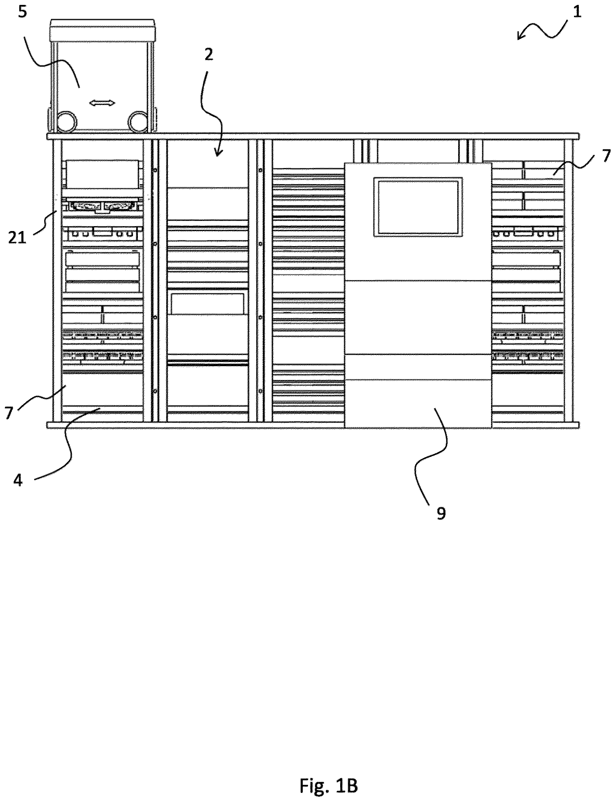

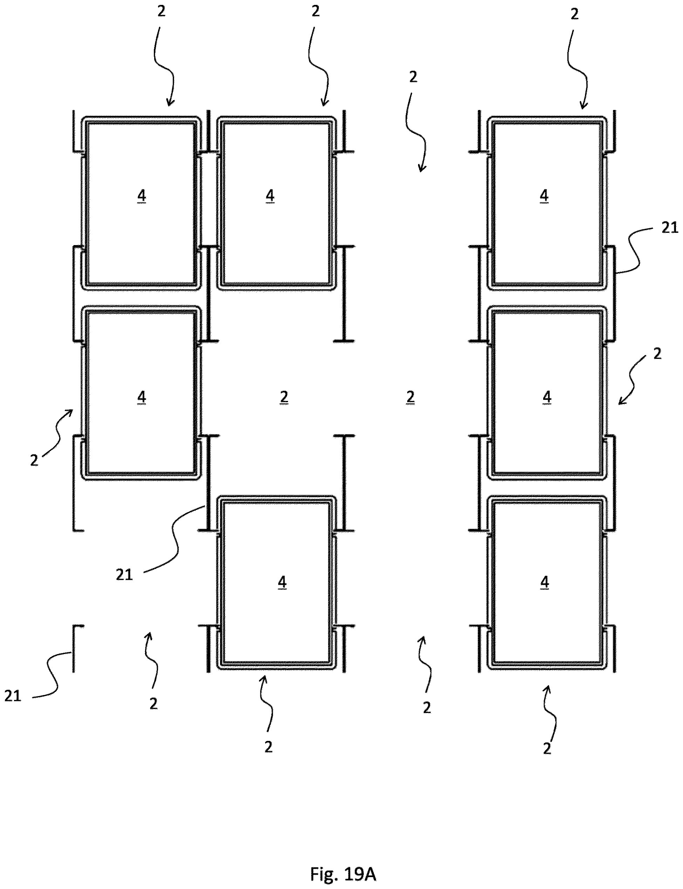

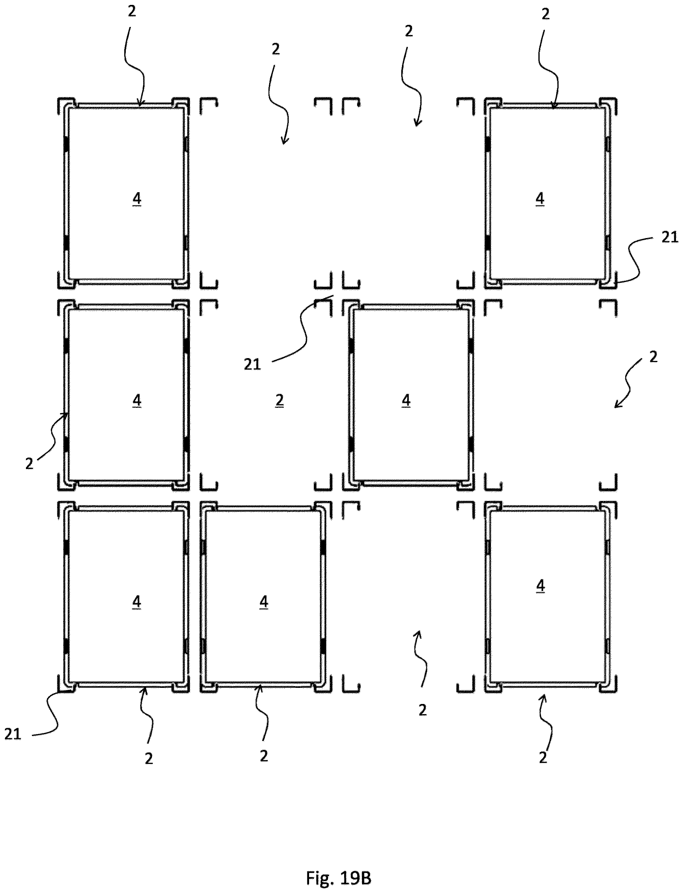

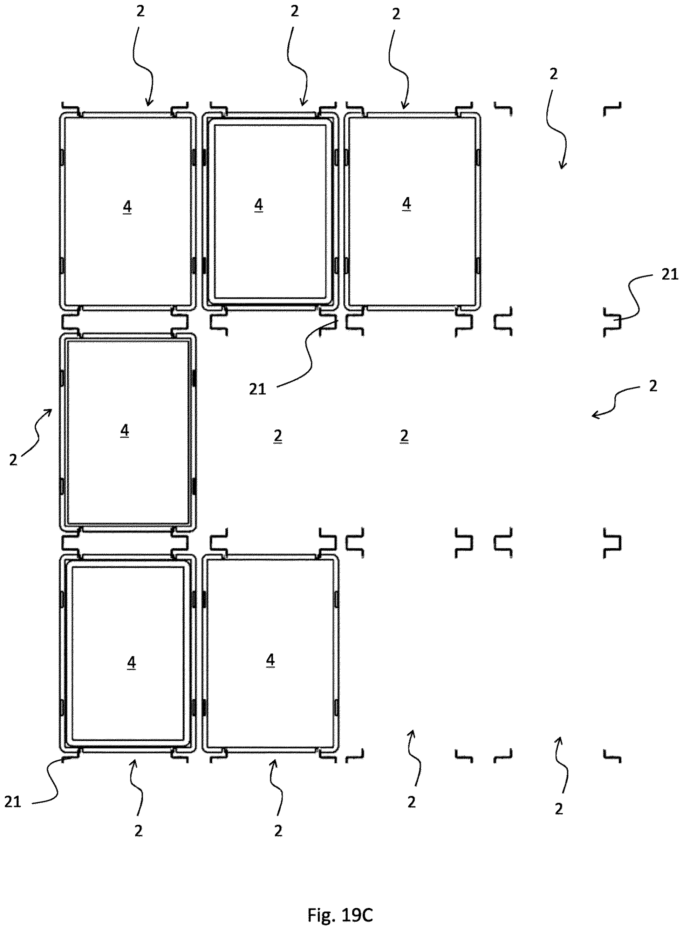

Fig. 1A und 1B zeigen ein Warenlagersystem 1 gemäß dem ersten Aspekt der vorliegenden Erfindung in einer bevorzugten Ausführungsform. Das Warenlagersystem 1 weist eine Mehrzahl von vertikalen Schächten 2 auf, die aneinander angrenzend angeordnet sind und hier jeweils eine rechteckige Grundfläche aufweisen. Jeder der Schächte 2 ist hier begrenzt durch vier Eckpfeiler 21. D.h. an jeder Ecke eines (quaderförmigen) Schachts ist ein Eckpfeiler 21 angeordnet. Es wird also jeweils zwischen vier Eckpfeilern ein Schacht bzw. Schachtraum (hier quaderförmig) gebildet, in dem Lagergutträger vertikal übereinander gelagert werden. Es sind vielfache Ausführungsformen der Schächte 2 und/oder deren Begrenzungen, beispielsweise durch unterschiedlich gestaltete Pfeiler 21, im Rahmen der vorliegenden Erfindung zweckmäßig. Lediglich beispielhaft sind in den Darstellungen in Fig. 19A-C einige Ausführungsformen von Schächten 2 und Pfeilern 21 dargestellt. Jeder der Schächte 2 kann entweder leer oder mit ein oder mehreren Lagergutträgern 4 gefüllt sein.

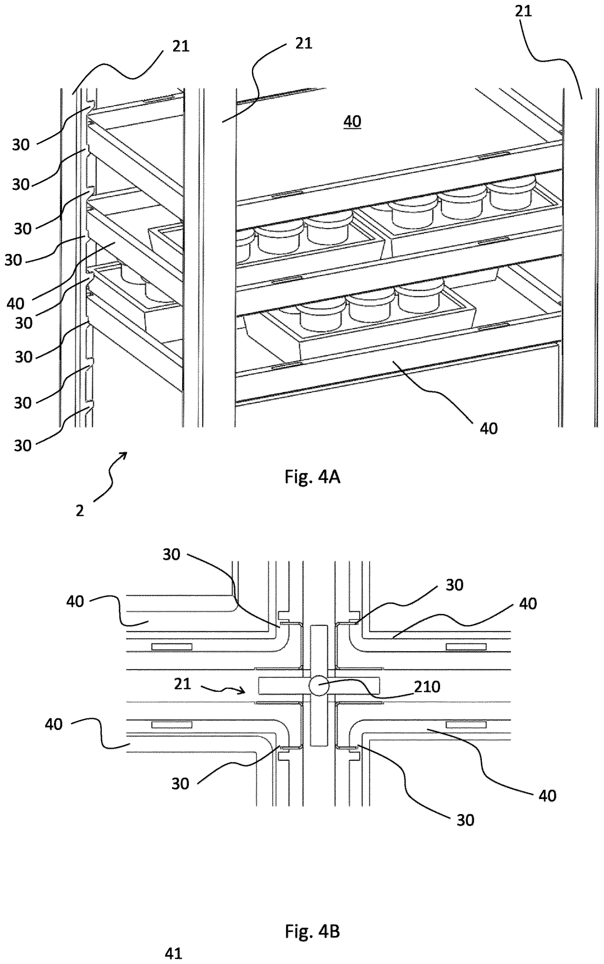

Jeder der Schächte 2, insbesondere jeder der Eckpfeiler 21 weist eine Mehrzahl von Abstützpositionen 3 auf (wie nachfolgend auch insb. mit Bezug auf Fig. 4 erläutert). Die Abstützpositionen 3 können auch als Schacht-Abstützelemente bezeichnet werden. Vorzugsweise können an jedem der vier Eckpfeiler 21, welche einen Schacht 2 begrenzen, Abstützpositionen bzw. Schacht-Abstützelemente vorgesehen sein, wobei die einzelnen Schacht-Abstützelemente mindestens zweier, bevorzugt jedes, Eckpfeiler(s) in einer gemeinsamen Ebene (oder alternativ in zwei parallelen Ebenen) mit korrespondierenden Schacht-Abstützelementen des anderen/der anderen drei Eckpfeiler liegen. Eine Abstützposition 3 kann bevorzugt verstanden werden als eine Ebene in welcher mindestens zwei, vorzugsweise vier Schacht-Abstützelemente vorgesehen sind.

In der vorliegenden Ausführungsform sind die einzelnen Abstützpositionen 3 (bzw. die einzelnen Schacht-Abstützelemente an den Eckpfeilern 21) vertikal gleichmäßig voneinander beabstandet. Ein vertikaler Abstand zwischen zwei benachbarten Abstützpositionen 3 beträgt vorzugsweise weniger als eine übliche Lagerguthöhe in dem beschriebenen Warenlagersystem 1. Im gezeigten Ausführungsbeispiel sind die Abstützpositionen 3 beispielsweise jeweils 50 mm voneinander beabstandet. An den Abstützpositionen 3 können Lagergutträger 4 gelagert werden. Anders ausgedrückt sind die Abstützpositionen 3 derart ausgebildet, dass Lagergutträger 4 theoretisch (z.B. in einem leeren Schacht) an einer beliebigen Abstützposition 3 abgestützt werden können.

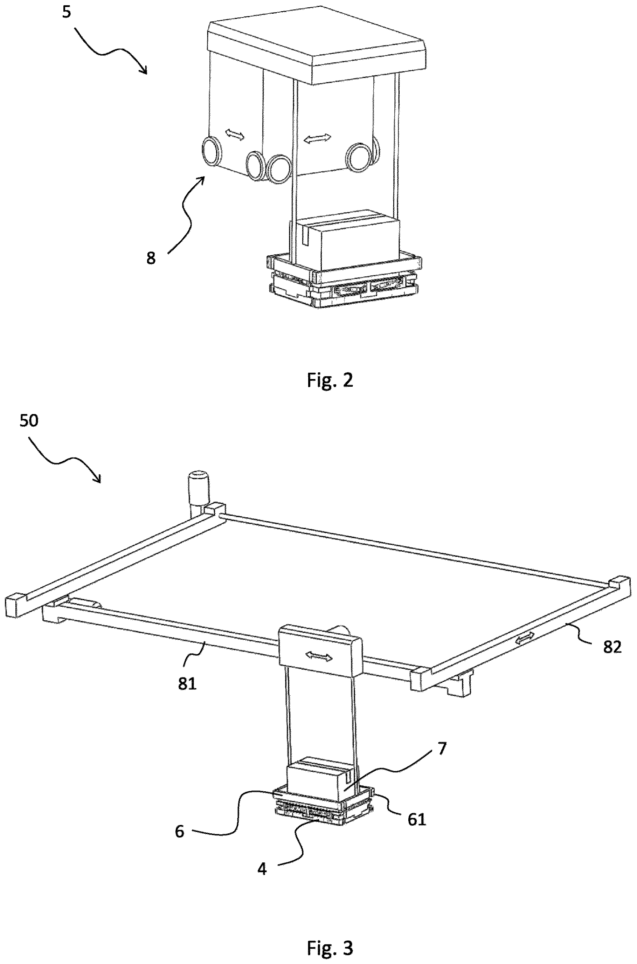

Zur Einlagerung von Lagergutträgern 4 in die Schächte 2 bzw. an die Abstützpositionen 3 kann ein Bediengerät 5 vorgesehen sein. Das Bediengerät 5 kann beispielsweise über dem Blocklager verfahrbar sein und Lagergutträger 4 von oben in das Blocklager bzw. das Warenlagersystem 1 einbringen. Zwei beispielhafte Ausführungsformen von Bediengeräten 5 werden nachfolgend in Bezug auf die Figuren 2 und 3 erläutert. Das Bediengerät 5 ist ausgebildet, um Lagergutträger in vertikaler Richtung in einen Schacht 2 einzubringen und darin an einer Abstützposition 3 abzustützen. Dabei kann eine geeignete Abstützposition gewählt werden, abhängig von einer Höhe des obersten bereits im Schacht befindlichen Lagergutträgers bzw. einer Oberkante und/oder Höhe eines Lagerguts 7, welches sich auf dem zuoberst im Schacht 2 eingelagerten Lagergutträger 4 befindet. In anderen Worten kann eine geeignete Abstützposition gewählt werden, abhängig von einer Gesamthöhe des obersten bereits im Schacht befindlichen Lagergutträgers inklusive eines oder mehrerer gegebenenfalls darauf befindlicher Lagergüter.

Generell können im gezeigten Blocklager (vgl. Figur 1A) sowohl leere Lagergutträger 4 eingelagert werden, wie beispielsweise in den in der Mitte des Warenlagersystems befindlichen Schächten gezeigt, oder es können Lagergutträger eingelagert werden, auf denen sich Lagergüter 7 befinden. Jedenfalls können die Lagergutträger 4 mittels des Bediengeräts 5 derart in einen Schacht 2 eingebracht werden, dass sich die Lagergutträger bzw. die darauf befindlichen Lagergüter 7 nicht berühren, allerdings die Lagergutträger nur einen minimalen Abstand zu ihren darunter bzw. darüber angeordneten Lagergutträgern und/oder Lagergüter 7 aufweisen, um die Lagerdichte maximal erhöhen zu können. So sind beispielsweise die Lagergutträger im rechten Bereich des Blocklagers an weiter voneinander beabstandeten Abstützpositionen 3 abgestützt als die leeren Lagergutträger, welche sich im mittleren Bereich des Lagers befinden. Vorzugsweise können die Abstützpositionen 3 derart voneinander beabstandet sein, dass, sofern leere Lagergutträger 4 in das Lager eingebracht werden, an jeder Abstützposition 3 ein Lagergutträger abgestützt werden kann, wobei die übereinander angeordneten Lagergutträger einen Abstand von maximal 100 mm, vorzugsweise maximal 50 mm zueinander aufweisen.

Werden nun Lagergutträger 4, welche mit Lagergütern 7 bestückt sind, in einen Schacht 2 eingebracht, so werden nicht alle im Schacht befindlichen Abstützpositionen 3 benutzt. Vielmehr wird ein erster Lagergutträger 4 beispielsweise an einer untersten Abstützposition 3 im Schacht 2 abgestützt. Ein Lagergut 7, welches sich auf diesem Lagergutträger 4 befindet, könnte allerdings eine Höhe aufweisen, die die darüber befindlichen z.B. fünf Abstützpositionen 3 überragt. Daher würde ein darüber eingelagerter Lagergutträger 4 erst an der sechsten Abstützposition befestigt werden, sodass dieser noch einen zumindest minimalen Abstand zur Oberkante der auf dem darunter befindlichen Lagergutträger 4 angeordneten Lagergüter 7 aufweist. Lagergutträger 4 und darauf befindliches Lagergut 7 können also in Abhängigkeit ihrer Gesamthöhe an unterschiedlichen und variablen Positionen im Schacht abgestützt werden, vgl. insbesondere auch die Seitenansicht in Fig. 1B. Somit kann eine hohe Lagerdichte und/oder eine gute Durchlüftung der Lagergüter, beispielsweise zur Kühlung, erreicht werden.

Das erfindungsgemäße Warenlagersystem kann vorzugsweise am oder außerhalb des Blocklagers eine Pickstation 9 aufweisen, in welche das Bediengerät 5 einen Lagergutträger 4 beispielsweise mit Lagergut 7 einbringen kann.

Figur 2 zeigt eine bevorzugte Ausführungsform eines Bediengeräts 5, wie dieses auch in Figur 1 dargestellt ist. Das Bediengerät 5 weist eine Fahreinheit 8 auf, mit der es auf dem Warenlager bzw. über der Mehrzahl von Schächten 2 verfahren kann. Ferner weist das Bediengerät 5 eine Greifeinheit 6 auf, mittels der es einen Lagergutträger 4 greifen kann. Die Greifeinheit 6 ist vorzugsweise derart gestaltet, dass ein auf dem Lagergutträger 4 ausgebildeter Stellplatz für Lagergüter 7 nicht durch die Greifeinheit 6 verringert wird. Die Greifeinheit 6 kann in jeden der Schächte 2 abgesenkt werden, wobei Führungsrollen 61, welche vorzugsweise an den Seiten und/oder den Ecken der Greifeinheit 6 angeordnet sind, an den Eckpfeilern 21 des Schachts abrollen können. Die Greifeinheit 6 ist vorzugsweise ausgebildet, einen Lagergutträger 4 aufzunehmen und/oder freigeben, vorzugsweise übergeben, zu können. Weiter bevorzugt kann die Greifeinheit 6 ferner eine Abstützung des Lagergutträgers 4 an einer der Abstützpositionen 3 veranlassen. Dazu kann die Greifeinheit 6 bevorzugt durch Verschieben und Abstellen oder Verdrehen und Abstellen den Lagergutträger an einer Abstützposition abstützen. Alternativ kann die Greifeinheit 6 derart ausgebildet sein, dass sie, vorzugsweise mittels eines Aktivierungsmechanismus, einen am Lagergutträger vorgesehenen Mechanismus aktivieren kann. Wie die Greifeinheit ausgebildet ist und ob der Lagergutträger mittels Verschieben und Abstellen, Verdrehen und Abstellen oder durch einen beispielsweise mechanischen Mechanismus abgestützt wird, ist vorzugsweise abhängig von der Wahl des Lagergutträgers 4 und ist mit Bezug auf die nachstehenden Figuren 4-18 genauer erläutert.

Figur 3 zeigt eine alternative Ausführungsform des Bediengeräts 5. Dargestellt ist ein Raumportal 50, welches als Bediengerät bzw. Bediengerät im Rahmen der vorliegenden Erfindung dienen kann. Das Raumportal 50 weist anstelle der Fahreinheit 8 Führungsschienen 81 und 82 auf, an denen eine Greifeinheit 6 in mindestens zwei Richtungen verfahrbar ist. Die Führungsschienen 81 und 82 weisen vorzugsweise eine Schnittstelle auf, um diese an einer Hallendecke, am Hallenboden oder an den Schächten zu befestigen.

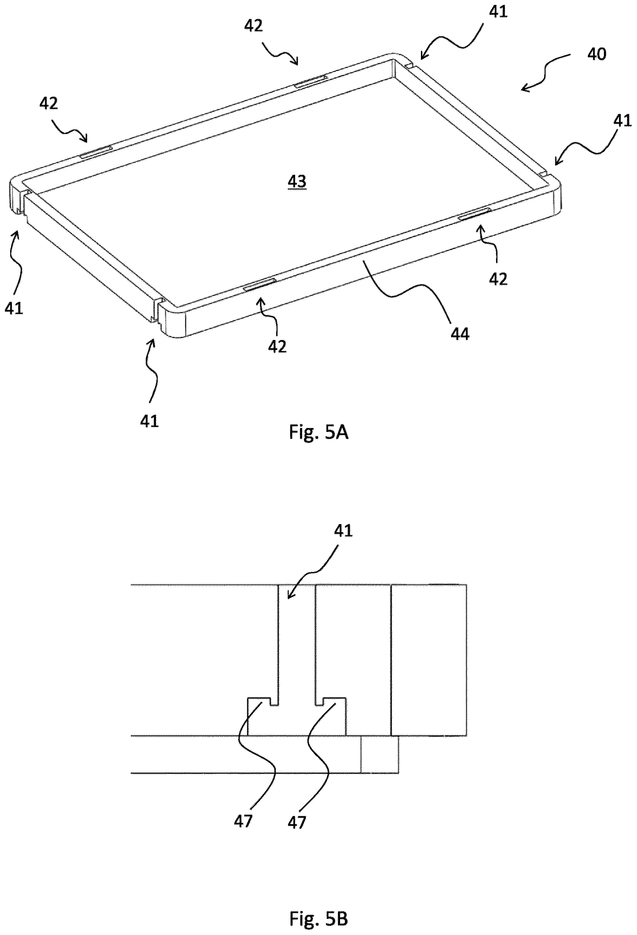

Figur 4A zeigt einen Schacht 2, beispielsweise aus dem Warenlagersystem 1, in einer ersten bevorzugten Ausführungsform. Der Schacht 2 in der dargestellten Abbildung ist isoliert gezeigt. In einem Warenlagersystem 1 ist dieser Schacht bevorzugt von weiteren angrenzenden Schächten 2 umgeben. Der Schacht 2 ist begrenzt durch vier Eckpfeiler 21. Jeder Eckpfeiler 21 weist eine Mehrzahl von starren Abstellflächen 30 (auch als Abstützflächen bezeichnet) auf, welche als Abstützpositionen 3 dienen. Mit anderen Worten sind die Schacht-Abstützelemente als Abstellflächen 30 ausgebildet. An den Abstellflächen 30 können Lagergutträger 40, welche eine bzw. mehrere Nuten 41 aufweisen, abgestützt werden. Die ein oder mehreren Nuten 41 können als Träger-Abstützelemente dienen bzw. bezeichnet werden. Der Lagergutträger 40 stellt eine bevorzugte Ausführungsform eines Lagergutträgers 4, wie im Warenlagersystem 1 aus Figur 1 gezeigt, dar. Die Struktur des Lagergutträgers 40 in der ersten bevorzugten Ausführungsform ist detailliert in Figur 5A dargestellt.

Der Lagergutträger 40 weist eine ebene Grundfläche 43 auf, auf der Lagergüter 7 positioniert werden können. Die Grundfläche 43 ist von einem Rahmen 44 umgeben. In der gezeigten Ausführungsform ist der Rahmen 44 geschlossen, d.h. er umrandet die gesamte Grundfläche 43. In alternativen Ausführungsformen kann der Rahmen 44 auch aus mehreren unterbrochenen, vorzugsweise aus vier, Rahmensegmenten aufgebaut sein.

Im Rahmen 44 sind stirnseitig jeweils zwei Nuten 41 angeordnet. Anders ausgedrückt weist der Lagergutträger 40 vier Nuten 41 auf. Vorzugsweise sind die vier Nuten 41 identisch ausgebildet. Die Nut 41 ist hier T-förmig ausgebildet, in einer Seitenansicht in Form eines umgekehrten T. D.h. der Quersteg der T-förmigen Nut befindet sich an einer Unterkante des Lagergutträgers 40, wobei die Basis des T sich (vertikal) nach oben erstreckt und den Rahmen 44 des Lagergutträgers 40 vollständig von unten nach oben ausspart. Anstelle der T-förmigen Nut können auch andere Formen von Aussparungen am Lagergutträger eingesetzt werden, beispielsweise eine L-förmige Aussparung. Jedenfalls ist es mittels solcher Aussparungen 41 im Zusammenspiel mit den Abstellflächen 30 möglich, einen Lagergutträger im Schacht 2 abzustützen. Dies ist beispielsweise auch in Fig. 4B in einer Draufsicht zu sehen. In Figur 4B sind vier um einen Eckpfeiler 21 angeordnete Schächte 2 mit jeweils eingelagerten Lagergutträgern 40 teilweise dargestellt. Die Lagergutträger 40 sind in den Schächten abgestützt, indem der Quersteg der T-förmigen Nut 41 auf jeweiligen Abstellflächen 30 der Schächte 2 aufliegt. Um einen dieser Lagergutträger auszulagern, muss dieser zunächst angehoben werden (damit die Abstellflächen 30 sich nicht länger in am Quersteg der T-förmigen Nut 41 gebildeten und als Sicherungslaschen dienenden Vertiefungen 47 befinden) und anschließend horizontal im Schacht verschoben werden (in Fig. 4B nach oben bzw. unten), sodass die Abstellfläche 30 in einer Draufsicht innerhalb der Basis der T-förmigen Nut 41 ist, und der Lagergutträger somit also nach unten an der Abstellfläche 30 vorbeibewegt werden kann oder nach oben an weiteren über der Abstellfläche 30 angeordneten Abstellflächen vorbeibewegt werden kann.

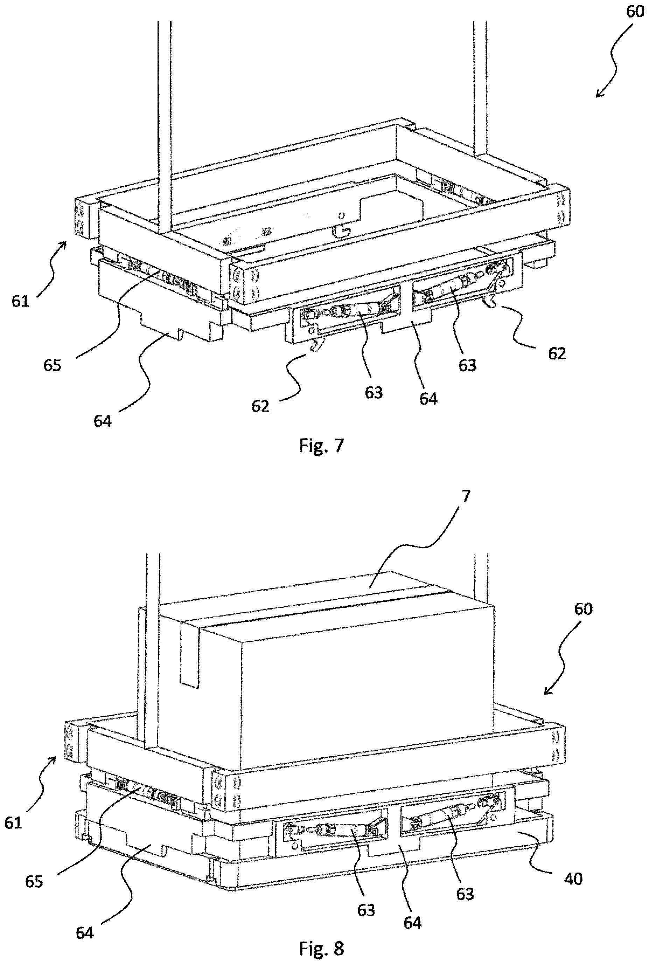

Der Lagergutträger 40 weist ferner Aufnahmen 42 auf, an welchen der Lagergutträger 40 von der Greifeinheit 6 des Bediengeräts aufgenommen werden kann. Vorzugsweise sind die Aufnahmen 42 in Form eines Hohlraumes in der Seitenwand 44 ausgebildet, in welchen Haken 62 der Greifeinheit 6 eingreifen können. Die Aufnahme des Lagergutträgers 40 mittels der Greifeinheit 6, bzw. eines als Greifeinheit 6 eingesetzten besonders vorteilhaft gestalteten Greifers 60 ist in den Figuren 7 und 8 genauer erläutert.

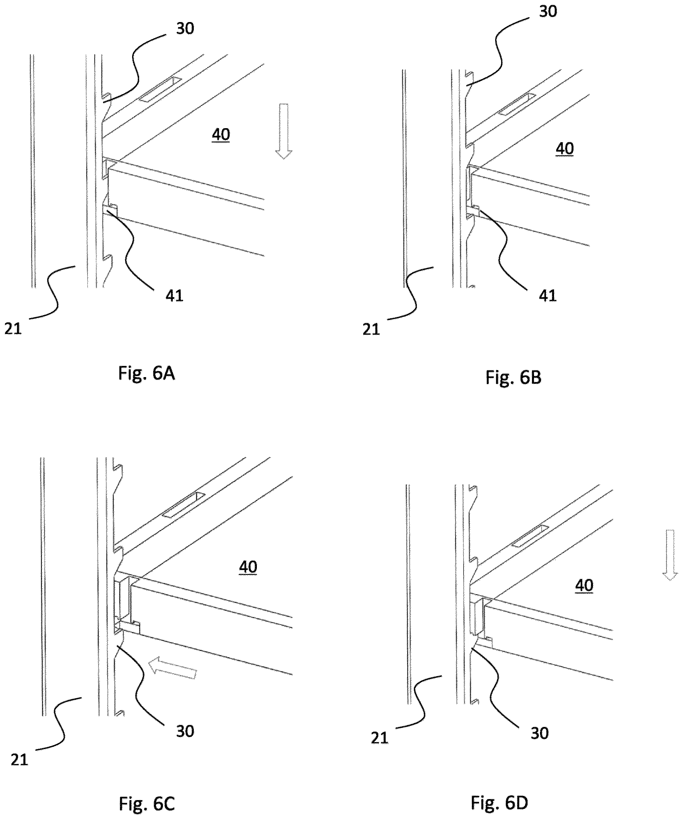

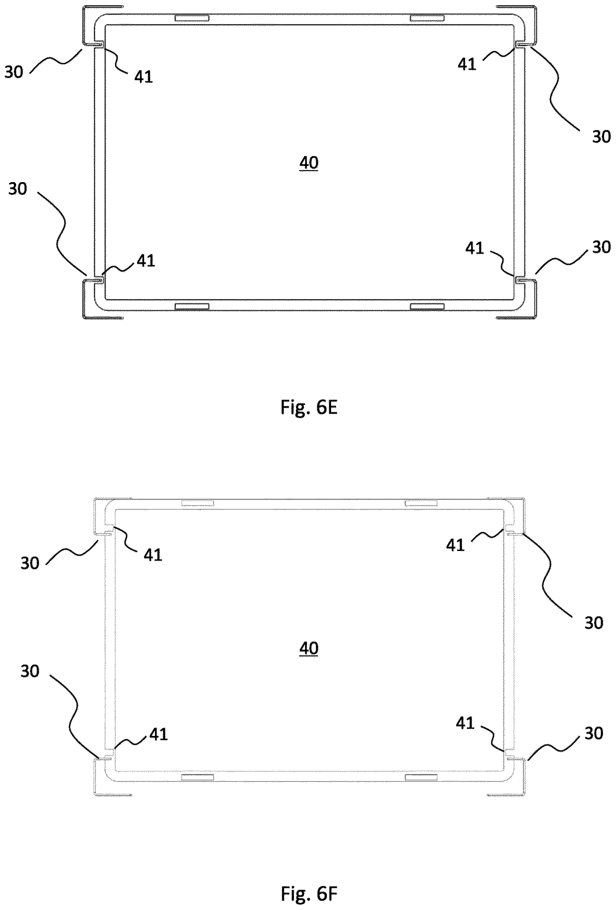

Die Figuren 6A-6D zeigen, wie ein Lagergutträger 40 in einen Schacht 2 eingebracht werden kann und an einer Abstellfläche 30 abgestützt werden kann. Wie in Figur 6A gezeigt, wird der Lagergutträger 40 zunächst von oben vertikal nach unten in den Schacht 2 eingebracht, wobei die Abstellflächen 30 durch die Aussparungen 41, insbesondere durch die Basis der Aussparungen 41 laufen, und somit der Lagergutträger 40 an den Abstellflächen 30 vorbei tiefer in den Schacht 2 geführt werden kann. Dies ist auch in einer Draufsicht in Fig. 6E gezeigt. Ist die Abstellfläche 30, an der der Lagergutträger abgestützt werden soll, erreicht, wie in Figur 6B dargestellt, so kann der Lagergutträger 40 seitlich im Schacht verschoben werden (vorzugsweise um einen kleinen Versatz), sodass sich der Quersteg der T-förmigen Aussparung 41 über der Abstellfläche 30 befindet, wie in Figur 6C dargestellt, und der Lagergutträger 40 anschließend, wie in Figur 6D dargestellt, vertikal nach unten auf die Abstellflächen 30 abgesenkt wird. Somit lastet das Gewicht des Lagergutträgers 40 nun auf den Abstellflächen 30, wie in Figur 6D dargestellt und auch in der Draufsicht in Fig 6F gezeigt.

Es sind, in der gezeigten Ausführungsform, Sicherungslaschen an der Nut 41 vorgesehen, um den Lagergutträger 40 gegen ein ungewolltes Herausrutschen zu sichern. Bevorzugt sind die Sicherungslaschen im Quersteg der T-förmigen Nut 41 gebildet, dadurch dass ein Randbereich des Querstegs vertikal tiefer ausgespart ist, als ein Mittelbereich. Anders ausgedrückt hat die T-förmige Nut bevorzugt die Form eines T mit Serifen am Quersteg, wobei die Serifen die vertikal tiefer ausgesparten Bereiche darstellen. Hierzu ist insbesondere auf Fig. 5B verwiesen. Fig. 5B zeigt ein Detail des Lagergutträgers 40 aus Fig. 5A in einer Seitenansicht auf die Nut 41. Die Nut 41 ist T-förmig ausgebildet mit einer sich vertikal erstreckenden Basis und einem sich horizontal erstreckenden Quersteg. Der Quersteg weist auf zumindest einer Seite der Basis, hier beidseitig zur Basis eine Vertiefung 47 auf, welche sich zumindest teilweise parallel zur Basis nach oben erstreckt. Somit werden durch die Vertiefungen 47 Sicherungslaschen gebildet. Bevorzugt wird der Lagergutträger 40 beim Abstellen auf den Abstellflächen 30 mit den Vertiefungen 47 auf den Abstellflächen 30 positioniert und ist somit durch die Sicherungslaschen gegen seitliches Verrutschen gesichert.

Das Einbringen des Lagergutträgers 40 sowie das seitliche Verschieben des Lagergutträgers 40 im Schacht kann vorzugsweise mittels des Bediengeräts 5, insbesondere mit dem die Greifeinheit 6 bildenden Greifers 60 des Bediengeräts 5, realisiert werden. Dazu weist das Bediengerät 5 in der ersten bevorzugten Ausführungsform einen Greifer 60 auf, der für das Zusammenspiel mit dem Lagergutträger 40 und den Abstellflächen 30 optimiert ist. Der Greifer 60 ist in den Figuren 7 und 8 dargestellt. Der Greifer 60 weist Haken 62 auf, mittels denen der Lagergutträger 40 aufgenommen werden kann. Die Haken 62 sind beweglich am Greifer 60 angeordnet und werden in der gezeigten Ausführungsform von jeweils einem Aktor 63 betätigt. Der Aktor 63 kann vorzugsweise ein Pneumatik- oder Elektrozylinder sein. Alternativ kann auch ein Hydraulik- oder Pneumatikkolben, ein Motor und/oder eine Feder zum Einsatz kommen. Bevorzugt kann der Aktor 63 wie eine Zugfeder wirken, sodass die Haken 62 in einer Greifposition sind, wenn keine Energie auf den Greifer 60 aufgebracht wird. Somit genügt das System den Fail-Safe Kriterien.

Der Greifer 60 weist neben den bereits erläuterten Führungsrollen 61 vorzugsweise auch Zentrierungen 64 auf, mittels denen ein Lagergutträger 40 in der Greifeinheit bzw. dem Greifer 60 zentriert werden kann. Zusätzlich weist der Greifer 60 eine lineare Verschiebeeinheit auf, welche den Lagergutträger in oder aus der Abstützposition verbringt (bzgl. des Schachts), indem diese den unteren Teil des Greifers (also den unteren Rahmen mit den Zentrierungen 64, den Haken 62 sowie den Aktor 63) horizontal verschieben kann. In anderen Worten dient die lineare Verschiebeeinheit als Aktivierungsmechanismus, hier also als Verschiebemechanismus 65, um den Lagergutträger in eine abgestützte Anordnung und in eine nicht-abgestützte Anordnung zu verschieben. Ein mittels der Haken 62 aufgenommener Lagergutträger 40 befindet sich in der nicht-abgestützten Anordnung vorzugsweise exakt unter dem oberen Rahmen (den Teil mit den Führungsrollen 61) des Greifers 60, wie in Figur 8 dargestellt. Bei Aktivierung des Verschiebemechanismus 65 wird der Lagergutträger 40 horizontal verschoben, wie in Fig. 6C und 6D, bzw., in den Draufsichten in Fig. 6E und 6F dargestellt.

Somit können die Abstellflächen 30 in den Nuten 41, insbesondere dem Quersteg der T-förmigen Nuten 41, bevorzugt in die darin gebildeten Vertiefungen 47, eingreifen, und der Lagergutträger 40 kann an einer Abstellfläche 30 und somit im Schacht 2 abgestützt werden. Verschiedene Ausführungsformen von Schacht 2 bzw. Abstützpositionen 3 (Schacht-Abstützelemente), dem Lagergutträger 4 (mit Träger-Abstützelementen, die auf die Schacht-Abstützelemente abgestimmt sind, bspw. Nuten 41 mit Vertiefungen 47) und der Greifeinheit 6, unterscheiden sich vorzugsweise lediglich in mindestens einem oder mehrerer der folgenden Punkte: der Schnittstelle zwischen Lagergutträger 4 und Schacht-Abstützelement 3, der Schnittstelle zwischen Lagergutträger 4 und Greifeinheit 6, sowie des Aktivierungsmechanismus in der Greifeinheit 6 und der konkreten Ausführung der Träger-Abstützelemente. Einzelne Merkmale des beschriebenen Systems lassen sich daher uneingeschränkt mit den nachfolgend beschriebenen Systemen kombinieren, sofern nicht ausdrücklich eine Alternative beschrieben ist.

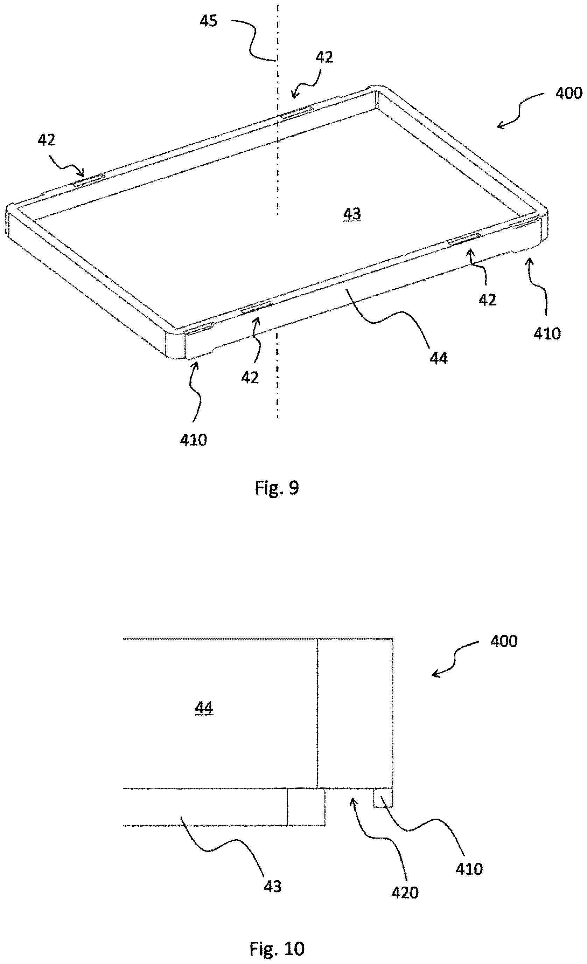

Ein Lagergutträger nach einer zweiten bevorzugten Ausführungsform der vorliegenden Erfindung ist zusammen mit einem entsprechend adaptierten Schacht 2 sowie einer Greifeinheit 6 in den nachfolgenden Figuren 9 bis 13 beschrieben. Figur 9 zeigt den Lagergutträger 400 in der zweiten bevorzugten Ausführungsform. Der Lagergutträger 400 ist grundsätzlich gleich aufgebaut wie der Lagergutträger 40 und unterscheidet sich lediglich in der Ausgestaltung der Träger-Abstützelemente. Anstelle der Aussparungen bzw. Nuten 41 kommt ein Randbereich 420, vorzugsweise mit Sicherungsstegen 410 zum Einsatz. Die Ausgestaltung von Randbereich 420 und Sicherungsstege 410 ist deutlich in der Seitenansicht in Figur 10 zu erkennen, welche einen Rand des Lagergutträgers 400 im Detail zeigt. Die Grundfläche 43 des Lagergutträgers 400 erstreckt sich bevorzugt unterhalb des Seitenrahmens 44 und nicht gänzlich bis zu dessen äußerem seitlichen Rand. Somit kann der Lagergutträger 400 in seinem Randbereich 420 an einer Abstützposition 3 eines Schachts 2 befestigt werden. Der Lagergutträger 400 weist vorzugsweise ein oder mehrere (hier vier) vom Seitenrahmen 44 nach unten hervorstehende Sicherungsstege 410 auf. Somit kann der Lagergutträger 400, wenn er an einer Abstützposition 3 aufliegt, gegen ungewolltes Verrutschen gesichert werden. Der Lagergutträger 400 wird vorzugsweise mittels einer Drehung um seine vertikale Mittelachse 45, welche in Figur 9 schematisch dargestellt ist, an den Abstützpositionen 3 eines Schachts 2 abgestützt.

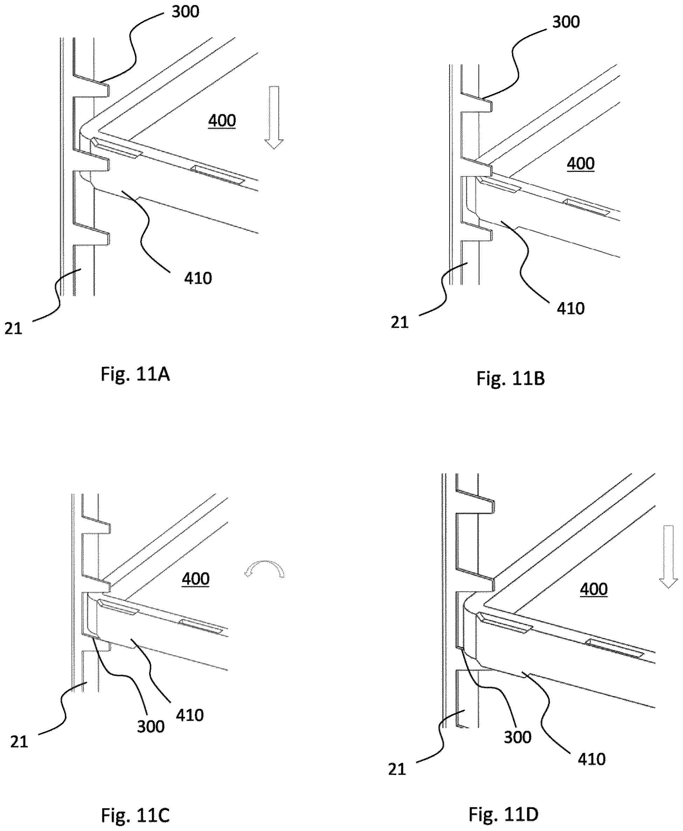

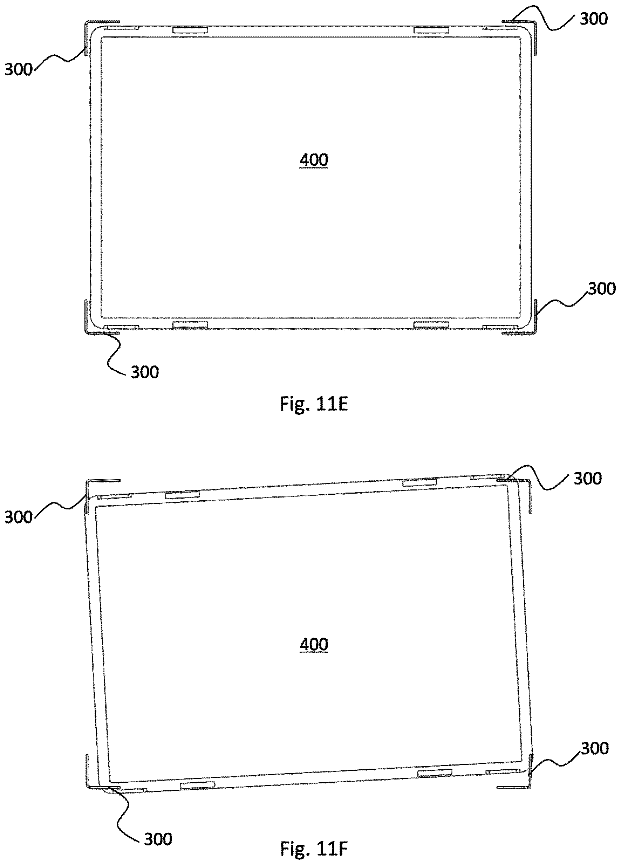

Ein Einlagerungsprozess des Lagergutträgers 400 in einen dafür ausgelegten Schacht 2 ist in der Figurenfolge 11A bis 11D gezeigt. Der Schacht 2 in der zweiten bevorzugten Ausführungsform weist an seinen Eckpfeilern 21 Auflageflächen und/oder starre Abstellflächen 300 (auch als Abstützflächen bezeichnet) auf, welche als Abstützpositionen 3 dienen. Der Lagergutträger 400 kann von oben in vertikaler Richtung in einen Schacht 2 eingeführt werden, wobei die Abmessungen des Lagergutträgers derart gewählt sind, dass dieser an den Abstellflächen 300 der Eckpfeiler 21 vorbeigeführt werden kann (zumindest solange sich der Lagergutträger 400 in einer Draufsicht mittig im Schacht 2 befindet und symmetrisch mit dem Schacht 2 (bzw. zu den Eckpfeilern 21) orientiert ist). Dies ist auch in einer Draufsicht in Fig. 11E gezeigt. Der Lagergutträger 400 befindet sich also vollständig in einem Raum zwischen den Eckpfeilern 21, also innerhalb des Schachts 2. Bei einem Einbringen in den Schacht 2 in vertikale Richtung wird der Lagergutträger 400 an den Abstellflächen 300 vorbeigeführt (Fig. 11A). Sobald sich der Lagergutträger zwischen einer Abstellfläche 300, auf der er abgestützt werden soll, und einer darüber befindlichen Abstellfläche befindet (Fig. 11B), wird eine Drehung des Lagergutträgers 400 um seine vertikale Mittelachse 45 veranlasst, vorzugsweise durch das Bediengerät 5. Sobald der Lagergutträger gedreht wurde, befindet sich zumindest ein Abschnitt des Lagergutträgers 400, vorzugsweise ein Rand- und/oder Eckbereich des Lagergutträgers 400 in einer Draufsicht über der Abstellfläche 300 (Fig. 11C). Wird der Lagergutträger 400 nun weiter abgesenkt, liegt der Lagergutträger 400, vorzugsweise mit seinem Randbereich 420, auf der Abstellfläche 300 auf und ist somit im Schacht 2 bzw. am Eckpfeilern 21 abgestützt (Figur 11D). Dies ist auch in einer Draufsicht in Fig. 11F gezeigt.

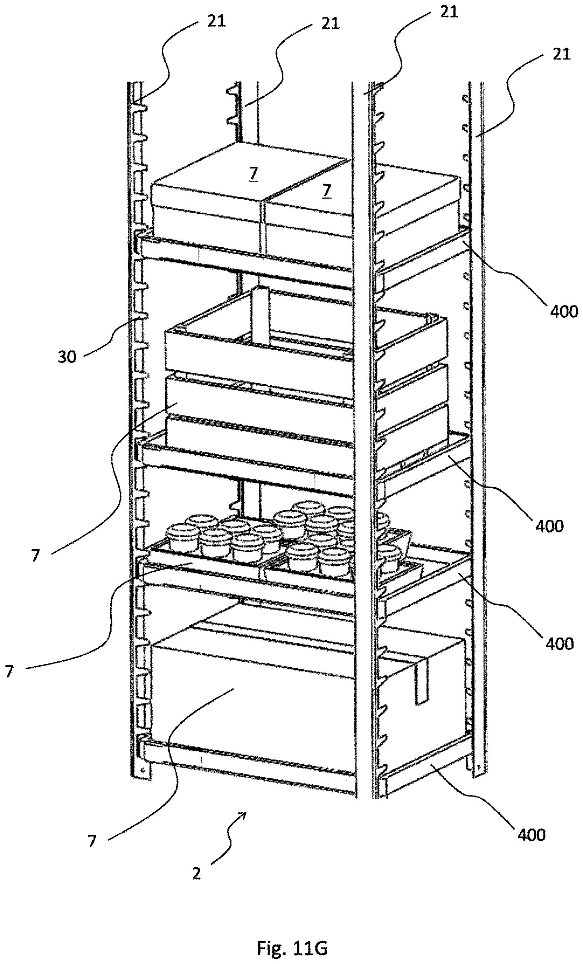

Ein isolierter Schacht 2 nach der zweiten bevorzugten Ausführungsform der Erfindung (als Teil eines Warenlagersystems mit einer Mehrzahl von Schächten nach der zweiten bevorzugten Ausführungsform) ist in Fig. 11G in einer perspektivischen Ansicht gezeigt. Es ist erkennbar, wie die (gegenüber der Schachtgeometire verdrehten) Lagergutträger 400 auf den Abstellflächen 300 aufliegen und von diesen im Schacht gehalten werden. Der Abstand, den zwei Lagergutträger 400 zueinander aufweisen, ist abhängig von der Gesamthöhe der Lagergutträger 400 inklusive der darauf befindlichen Lagergütern 7. Wenn, wie hier, alle Lagergutträger 400 identisch sind, ist der Abstand der Lagergutträger 400 im Schacht 2 also abhängig von der Höhe der darauf befindlichen Lagergüter 7. In anderen Worten wurden die Lagergüter 400 im gezeigten Schacht 2 eingelagert, indem sie auf Abstellflächen 300 abgestellt wurden, welche abhängig von der Gesamthöhe des einzulagernden Lagergutträgers 400 inklusive darauf befindlicher Lagergüter 7 gewählt wurden.

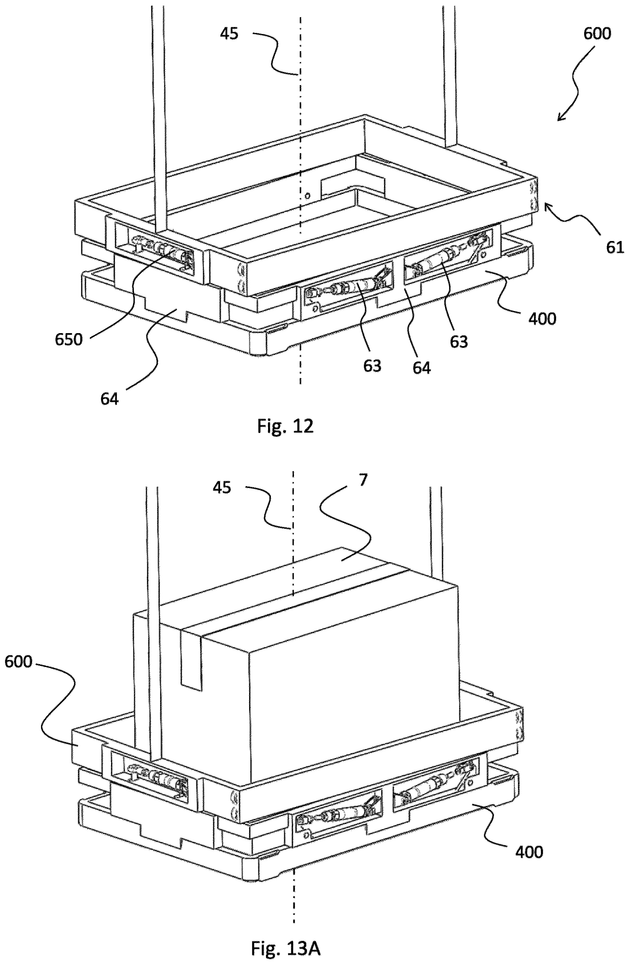

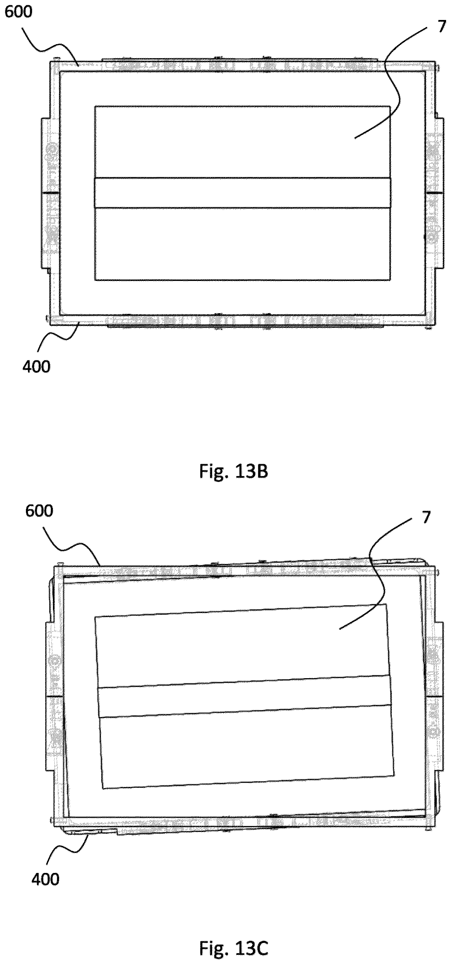

Figuren 12 und 13 zeigen eine bevorzugte Ausführungsform der Greifeinheit 6, hier der Greifer 600, welche am Bediengerät 5 verwendet werden kann, um einen Lagergutträger nach der Ausführungsform 400 in einen Schacht mit Abstellflächen 300 einzubringen und dort abzustützen. Der Greifer 600 ist im Wesentlichen identisch aufgebaut zum Greifer 60. Insbesondere weist auch der Greifer 600 vorzugsweise Führungsrollen 61 auf, um am Regalschacht 2 (bzw. den Eckpfeilern 21) geführt zu werden und Haken 62 (nicht sichtbar), welche mittels eines Aktors 63 betätigt werden, um einen Lagergutträger 400, wie in Figur 12 gezeigt, aufzunehmen. Auch weist der Greifer 600 Zentrierungen 64 auf, um einen Lagergutträger 400 zu zentrieren. Der wesentliche Unterschied zwischen dem Greifer 600 und dem Greifer 60 besteht im Aktivierungsmechanismus. Anstelle des Verschiebemechanismus 65 kommt ein Drehmechanismus 650 zum Einsatz. Somit kann der untere Teil des Drehmechanismus 650 (der Teil mit den Zentrierungen 64) gegenüber dem oberen Teil (dem Teil mit den Führungsrollen 61) verdreht werden, wie dies in Figur 12 angedeutet ist.

Figur 13A zeigt den Greifer 600 zusammen mit einem mit Lagergut 7 beladenen Lagergutträger, wobei der Drehmechanismus 650 nicht aktiviert ist, das heißt dass der Lagergutträger 400 sich in etwa kongruent unter dem Greifer 600 befindet. In einer Draufsicht verdeckt beispielsweise der Rand des Greifers 600 den Rand 44 des Lagergutträgers vollständig, vergleiche Fig. 13B. Ist der Drehmechanismus dagegen aktiviert, sind die Ecken des Greifers 600 sowie des Lagergutträgers 400 in einer Draufsicht zueinander versetzt, vergleiche Fig. 13C. Anders ausgedrückt kann mit Aktivierung der Drehmechanismus 650 der Greifer 600 den Lagergutträger 400 zumindest minimal, bevorzugt um mindestens 2°, weiter bevorzugt um mindesten 5°, weiter bevorzugt um mindestens 10°, und besonders bevorzugt um mindestens 15° um seine Vertikal-Mittelachse 45 verdrehen, um den Lagergutträger 400 auf einer bestimmten Ebene an Abstellflächen 300 eines Schachtes 2 abzustützen.

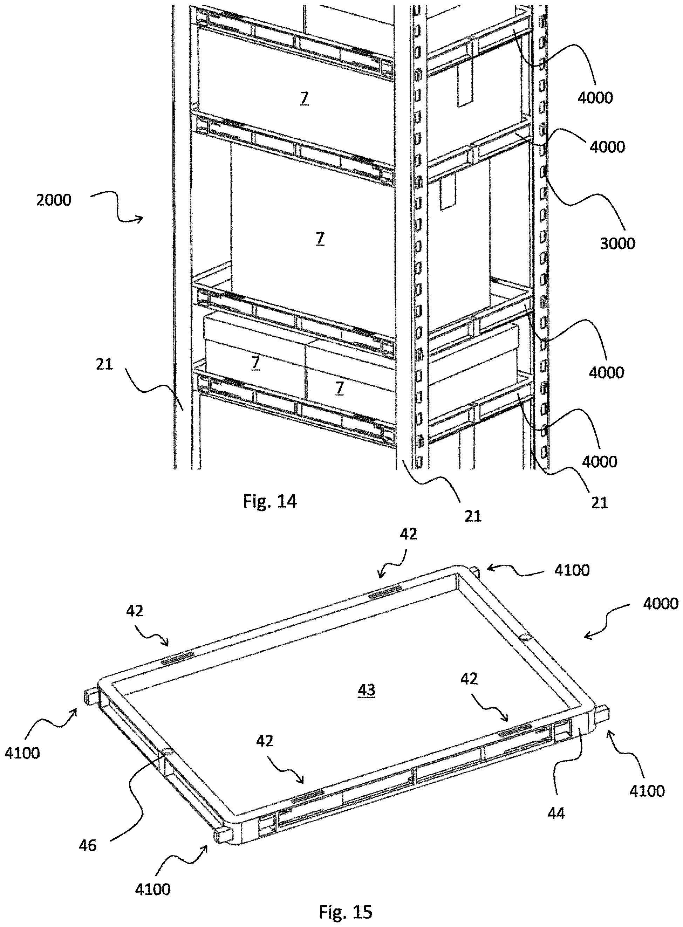

Eine dritte bevorzugte Ausführungsform von Regalschacht 2 bzw. Schacht-Abstützelement 3, Lagergutträger 4 und Greifeinheit 6 wird nachfolgend mit Bezug auf die Figuren 14 bis 18 erläutert. In Figur 14 ist ein Schacht 2000 eines bevorzugten Warenlagersystems dargestellt. Als Schacht-Abstützelemente 3 weist der Schacht 2000 Ausbrüche bzw. Bohrungen 300 (bzw. Hinterschneidungen) auf, welche einen gleichmäßigen, geringen vertikalen Abstand zueinander aufweisen. Ein Lagergutträger 4000 lässt sich an jedem der Ausbrüche 3000 befestigen. Die Wahl, an welchen der vertikal beabstandeten Ausbrüche 3000 ein Lagergutträger 4000 zweckmäßig abgestützt bzw. verriegelt werden kann, kann dabei - wie auch in den anderen Ausführungsbeispielen - abhängig von einer Höhe der auf dem Lagergutträger befindlichen Lagergüter 7 sein. In anderen Worten kann ein geeigneter Ausbruch 3000, an dem ein Lagergutträger 4000 zweckmäßig abgestützt werden kann abhängig von einer Gesamthöhe des Lagergutträgers 4000 inklusive gegebenenfalls darauf befindlichem Lagergut 7 gewählt werden. So sind die Abstände der Lagergutträger 4000 im Schacht 2000 zueinander beispielsweise unterschiedlich, wie in Figur 14 erkennbar ist. Vorzugsweise sind die Lagergutträger 4000 derart im Schacht 2000 abgestützt, dass eine Unterkante eines Lagergutträgers 4000 nicht auf der Oberkante eines darunter angeordneten Lagerguts 7 aufliegt und weiter bevorzugt maximal so weit von einem darunter angeordneten Lagergut beabstandet ist, wie ein Abstand zwischen zwei Ausbrüchen 3000 im Schacht 2000. Wie für den Fachmann ersichtlich ist, können selbstverständlich auch größere Abstände zwischen den einzelnen Lagergütern und/oder Lagergutträgern gewählt werden, insb. wenn dies beispielsweise Vorteile hinsichtlich verbesserter Belüftung/Kühlung oder verbesserten Brandschutzes bringt.

Ein Lagergutträger 4000 gemäß der dritten bevorzugten Ausführungsform ist in Figur 15 gezeigt. Auch dieser Lagergutträger unterscheidet sich in erster Linie hinsichtlich der Träger-Abstützelemente von den zuvor gezeigten Lagergutträgern. Am Lagergutträger 4000 sind Träger-Abstützelemente in Form von verschiebbaren Bolzen 4100 vorgesehen. Die Bolzen 4100 sind vorzugsweise entlang einer Längsrichtung des Lagergutträgers 4000 im Rahmen 44 verschiebbar angeordnet und stehen somit an den Stirnseiten des Lagergutträgers 4000 vor oder lassen sich, bevorzugt vollständig, in den Rahmen 44 des Lagergutträgers 4000 einziehen. Zusätzlich oder alternativ könnten sich in gleicher Weise Bolzen 4100 entlang einer Querrichtung des Lagergutträgers 4000 anordnen lassen oder Bolzen 4100, insbesondere in Form von Klemmbacken, könnten an einer, zwei oder vier Stirnflächen des Lagergutträgers vorgesehen sein und aus den Stirnflächen herausragen oder in diese zurückgezogen werden.

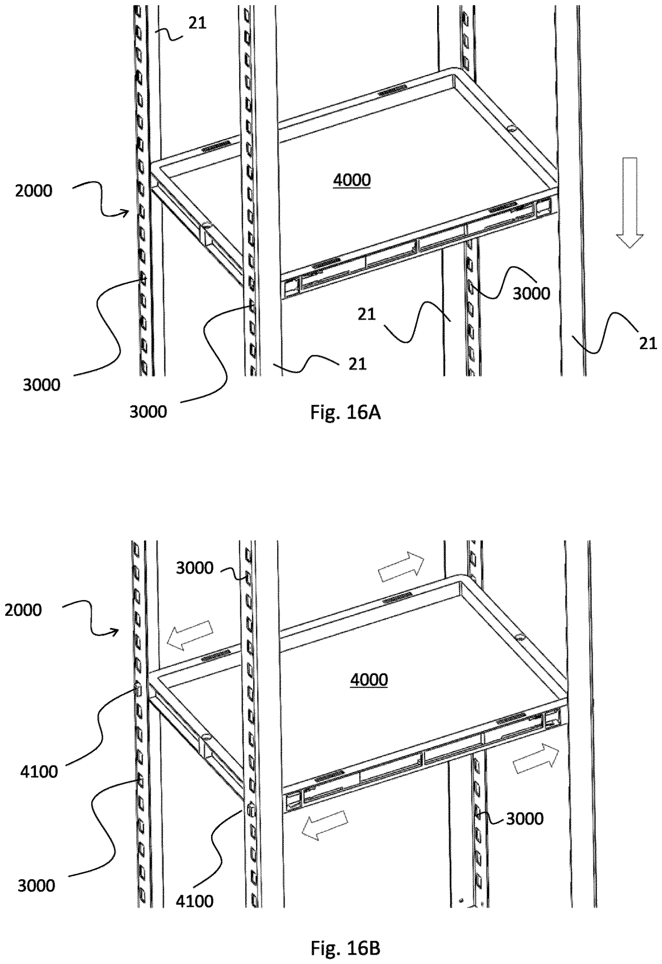

In den Figuren 16A und 16B ist dargestellt, wie sich ein Lagergutträger 4000 in einen Schacht 2000 einbringen lässt. In Figur 16A sind die Bolzen 4100 eingezogen, das heißt sie befinden sich, bevorzugt vollständig, im Rahmen 44 des Lagergutträgers 4000. Somit lässt sich der Lagergutträger 4000 zwischen den Eckpfeilern 21 vertikal durch den Schacht 2000 bewegen (Fig. 16A). Ist der Lagergutträger an einer Zielposition des Schachts 2000, können die Bolzen 4100 ausgefahren werden, und mit in einer Ebene liegenden Aussparung 3000 eingreifen (Fig. 16B). Bevorzugt ist an jeder Ecke des Lagergutträgers 4000 ein Bolzen vorgesehen und an jedem Eckpfeiler 21 des Schachts 2000 eine Mehrzahl von als Aussparungen 3000 ausgestalteten Abstützpositionen, sodass der Lagergutträger 4000 an allen vier Ecken an einem Eckpfeiler 21 abgestützt bzw. verriegelt werden kann. Die Abstützung des Lagergutträgers 4000 im Regal 2000 ist äußerst robust, widerstandsfähig, sicher und lässt sich verhältnismäßig einfach durch Aktivierung mittels eines Bediengeräts 5 bewerkstelligen. Allerdings weist der Lagergutträger 4000 mechanische Komponenten auf. Im Gegensatz dazu kann bei den Lagergutträgern 40 und 400 auf mechanische Komponenten, also bewegliche Teile, verzichtet werden, weshalb diese Form von Lagergutträger für sich genommen robuster und/oder kostengünstiger sein kann.

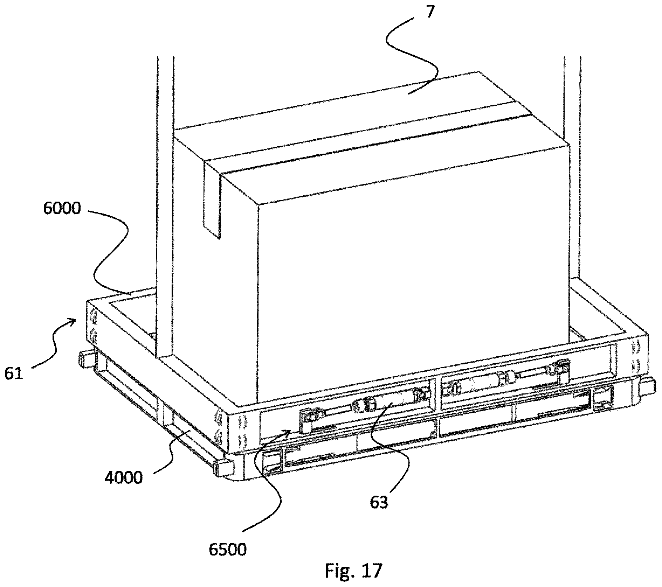

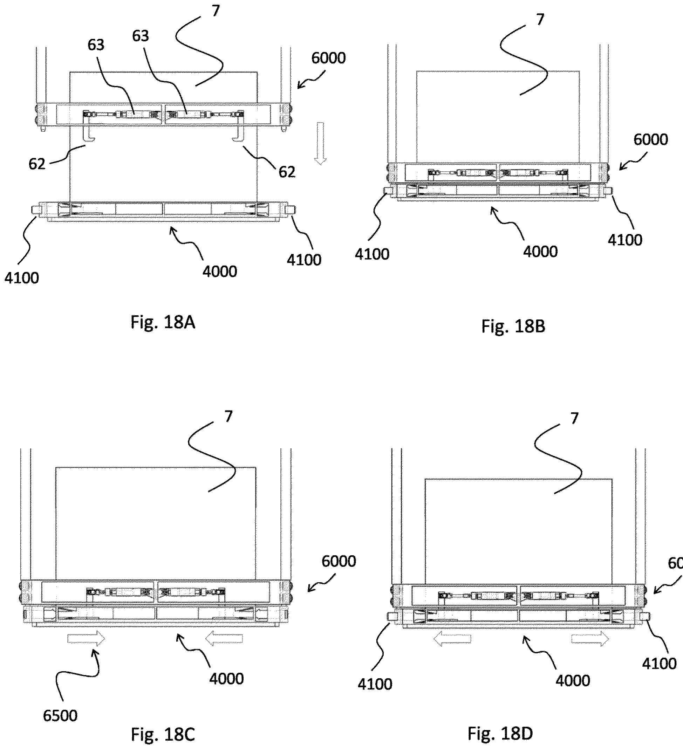

Figur 17 und 18 zeigen die Aktivierung des Lagergutträgers bzw. der Bolzen 4100 mittels eines Greifers 6000, welcher am Bediengerät 5 als Greifeinheit 6 eingesetzt werden kann, um das Warenlagersystem 1 gemäß der dritten bevorzugten Ausführungsform zu gestalten. Wie in Figur 17 zu erkennen ist, kann der Greifer 6000 im Wesentlichen ähnlich gestaltet sein wie die Greifer 60 und 600. Insbesondere kann auch der Greifer 6000 Führungsrollen 61 aufweisen und Haken (nicht gezeigt), welche von Aktoren 63 betätigt werden. Anstelle der Zentrierungen 64, welche bei den Greifern 60, 600 entlang des Außenumfangs angeordnet waren, kann der Greifer 6000 auch einen Zentrierstift aufweisen, welcher mit einer Zentrierbohrung 46 des Lagergutträgers 4000 eingreifen kann.

Der Greifer 6000 weist gegenüber den Greifern 60 und 600 insbesondere den Unterschied auf, dass kein separater Aktivierungsechanismus in Form eines Verschiebe- oder Drehmechanismus in dem Greifer 6000 vorgesehen werden muss, sondern dass der Aktivierungsmechanismus für die Aktivierung der Abstützelemente (Bolzen 4100) gemeinsam mit den Haken 62 ausgeführt werden kann. Somit kann erreicht werden, dass ein Lagergutträger 4000, welcher mit Bolzen 4100 ausgestattet ist, welche in eine ausgefahrene Position vorgespannt sind, mittels dem Greifer 6000 bzw. der Haken 62 gegriffen werden kann, und beim Greifen die Haken 62 nicht nur den Lagergutträger 4000 fassen, sondern dabei auch die Bolzen 6100 in den Rahmen 44 des Lagergutträgers 4000 zurückfahren. Somit kann der an dem Greifer 6000 befestigte Lagergutträger durch einen Schacht 2000 bewegt werden. Löst sich der Greifer vom Lagergutträger, schieben die Bolzen 4100 nach außen und stützen sich, vorzugsweise in einer der Aussparungen 3000 ab.

Der Fachmann wird allerdings erkennen, dass diese Mechanismen (Greifen des Lagergutträgers und Mechanismus zur Aktivierung der Abstützelemente) selbstverständlich bei Bedarf auch separat ausgeführt werden können, etwa durch weitere Aktoren, insbesondere Pneumatik-, Hydraulik- oder Elektrikzylinder (nicht dargestellt), die separat von den Aktoren 63 der Haken 62 betätigt werden können.

Die Aufnahme und Abgabe eines Lagergutträgers 4000 mittels eines Greifers 6000 ist in den Figuren 18A bis 18D detailliert dargestellt. In Figur 18A befindet sich der Greifer 6000 in der sogenannten Aufnahmestellung. Die Aktoren 63 sind vollständig ausgefahren, die Haken 62 maximal weit zueinander beabstandet. In dieser Stellung wird der Greifer 6000 über den Lagergutträger 4000 und eventuell über darauf befindliche Lagergüter 7 gefahren, bis die Unterkante des Greifers 6000 in Kontakt mit der oberen Kante des Lagergutträgers 4000 steht (Figur 18B). Anschließend wird der Greifer 6000, genauer gesagt der Aktivierungsmechanismus, hier als Greifmechanismus 6500 ausgeführt, aktiviert. Dabei werden die Aktoren 63 betätigt, d.h. hier die Kolben zusammengezogen, die Haken 62 nähern aneinander an und arretieren damit den Lagergutträger 4000 an dem Greifer 6000 (Figur 18C). In dieser Position kann der Lagergutträger 4000 in einen Schacht 2000 eingebracht werden. Ist der Lagergutträger an einer gewünschten Abstützposition im Schacht 2000, wird der Greifer 6000, genauer gesagt der Greifmechanismus 6500, erneut betätigt, sodass die Aktoren 63, d.h. die Kolben wieder ausfahren und somit die Haken 62 wieder in die Ausgangsstellung zurückversetzt werden. Dabei geben die Haken 62 zunächst die Bolzen (Träger-Abstützelemente 4100) frei, welche sich somit in die Aussparungen 3000 im Schacht 2000 schieben und den Lagergutträger abstützen. Anschließend geben die Haken 62 bei weiterer Bewegung nach Außen auch den Lagergutträger 4000 frei, sodass der Greifer 6000 wieder nach oben verfahren werden kann und der Lagergutträger 4000 im Regalschacht verbleibt.

Auch wenn zusammen mit den oben beschriebenen bevorzugten Ausführungsformen hauptsächlich auf einen Einlagerungsprozess von Lagergutträgern in einen Schacht eingegangen wird, ist selbstverständlich mit diesen Systemen in ähnlicher Weise auch ein Auslagerungsprozess durchführbar, wobei die einzelnen Schritte lediglich in umgekehrter Reihenfolge ausgeführt werden.

Mittels der beschriebenen bevorzugten Ausführungsformen kann ein Warenlagersystem realisiert werden, in welchem erreicht werden kann, dass Lagergüter möglichst dicht und insbesondere in Abhängigkeit von ihren tatsächlichen Höhen (bzw. den tatsächlichen Höhen der darauf befindlichen Lagergüter) übereinander angeordnet werden können, ohne dass diese aufeinander gestapelt werden müssen. Damit kann insbesondere erreicht werden, dass die Lagerdichte erhöht, die Durchlüftung verbessert und/oder die Bauhöhe der Regalschächte 2 vergrößert werden kann, da die Lagergutträger nicht aufeinander lasten, sondern sich an den Eckpfeilern 21 abstützen können. Ferner kann erreicht werden, dass in Prozessen, bei denen aus Lagergutträgern herausgepickt wird und die Lagergüter nicht immer vollständig entnommen werden, nachkomprimiert werden kann. Das bedeutet, ein Lagergutträger, welcher nach und nach entleert wird (die Ware auf dem Lagergutträger wird nach und nach niedriger), kann in gleicher Weise wie die Höhe des Lagergutträgers bzw. der darauf befindlichen Lagergüter abnimmt, auch in einem kleineren Raum gelagert werden, was bei einem herkömmlichen Kistenlager nicht möglich ist. Darüber hinaus werden insbesondere bei Kühllagern Vorteile erzielt, da die auf den Lagergutträgern befindlichen Waren gut mit Luft umströmt werden können und dadurch eine effiziente Kühlung gewährleistet werden kann. Auch die Sicherheit des Lagers kann erhöht werden, da insbesondere für den Brandfall vorgesehene Sprinkleranlagen und Löscheinrichtungen (wie beispielsweise eine schematisch in Fig. 4B dargestellte Löscheinrichtung 210) effektiv auch in Zwischenräume zwischen Lagergütern angeordnet werden können.

Auch wenn hinsichtlich der einzelnen Figuren Merkmale isoliert betont sind, ist es für den Fachmann offensichtlich, dass Merkmale zwischen einzelnen Ausführungsformen auch kombiniert werden können. Darüber hinaus können auch alternative Ausführungsformen dieselben Vorteile aufweisen. Generell ist die Erfindung nicht durch einzelne Ausführungsformen, sondern durch die nachstehenden Ansprüche definiert.

## Patentansprüche

1. Warenlagersystem mit einer Mehrzahl von vertikalen Schächten, einer Steuerung, einer Mehrzahl von Lagergutträgern und mindestens einem Bediengerät, wobei
die Lagergutträger in jedem der Schächte an einer Mehrzahl von vertikal beabstandeten Abstütz-Positionen abstützbar sind;
das mindestens eine Bediengerät ausgebildet ist, jeweils mindestens einen einzulagernden Lagergutträger außerhalb der Schächte zu verfahren und von außen in einen ausgewählten Schacht einzubringen;
die Steuerung ausgebildet ist, eine Abstützung des mindestens einen einzulagernden Lagergutträgers an einer Zielposition im ausgewählten Schacht zu veranlassen, wobei die Steuerung die Zielposition aus der Mehrzahl vertikaler Abstütz-Positionen auswählt, abhängig:
von einer Gesamthöhe des einzulagernden Lagergutträgers inklusive eines oder mehrerer gegebenenfalls darauf befindlichen Lagergüter, und/oder
von einer Gesamthöhe mindestes eines im ausgewählten Schacht befindlichen Lagergutträgers inklusive eines oder mehrerer gegebenenfalls darauf befindlichen Lagergüter.

2. Warenlagersystem nach Anspruch 1, wobei die Steuerung die Zielposition aus der Mehrzahl vertikaler Abstütz-Positionen auswählt, abhängig von der Abstütz-Position eines oder mehrerer anderer im ausgewählten Schacht befindlicher Lagergutträger.

3. Warenlagersystem nach Anspruch 1 oder 2, wobei die Mehrzahl vertikal beabstandeter Abstütz-Positionen jeweils auf gegenüberliegenden Seiten und/oder in gegenüberliegenden Ecken der Schächte ausgebildet ist; und/oder wobei die Abstützung an der Zielposition auf gegenüberliegenden Seiten und/oder in gegenüberliegenden Ecken des ausgewählten Schachts erfolgt, vorzugsweise wobei mindestens zwei gegenüberliegende Abstütz-Positionen in einer gemeinsamen horizontalen Ebene oder in zwei parallelen Ebenen liegen.

4. Warenlagersystem nach einem der vorstehenden Ansprüche, wobei der einzulagernde Lagergutträger im ausgewählten Schacht von einer abgestützten Anordnung in eine nicht-abgestützte Anordnung überführbar ist, vorzugsweise durch Verdrehen und/oder horizontales Verschieben des einzulagernden Lagergutträgers im ausgewählten Schacht, bevorzugt mittels des Bediengeräts, wobei sich eine Außenkontur des einzulagernden Lagergutträgers in der nicht-abgestützten Anordnung bevorzugt komplett in einem Freiraum des ausgewählten Schachts befindet und der einzulagernde Lagergutträger somit vertikal transportierbar ist und Bereiche der Außenkontur des einzulagernden Lagergutträgers in der abgestützten Anordnung in einer Draufsicht bevorzugt in mindestens einen, den ausgewählten Schacht begrenzenden, Pfeiler und/oder Seitenwand ragen und der einzulagernde Lagergutträger somit abgestützt wird.

5. Warenlagersystem nach einem der vorstehenden Ansprüche, wobei die Lagergutträger jeweils mindestens zwei Träger-Abstützelemente aufweisen, vorzugsweise wobei die Träger-Abstützelemente an gegenüberliegende Seiten und/oder an diagonal gegenüberliegenden Kanten bzw. Ecken des jeweiligen Lagergutträgers angeordnet sind, wobei die Träger-Abstützelemente ausgebildet sind, den einen jeweiligen Lagergutträger in einem jeweiligen der Schächte gegen horizontales Verschieben und/oder gegen ein Verdrehen um eine Vertikalmittelachse des jeweiligen Schachts und/oder des jeweiligen Lagergutträgers zu sichern, wenn der jeweilige Lagergutträger an der Zielposition im jeweiligen Schacht abgestützt ist.

6. Warenlagersystem nach einem der vorstehenden Ansprüche, wobei das Bediengerät ausgebildet ist,
den Lagergutträger von der nicht-abgestützten Anordnung in die abgestützte Anordnung zu überführen; und/oder
einen Lagergutträger in einer horizontalen Ebene zu verschieben und/oder zu verdrehen, vorzugsweise um eine Vertikalmittelachse des Lagergutträgers.

7. Warenlagersystem nach einem der vorstehenden Ansprüche, wobei jeder Schacht Klemmflächen und/oder eine Mehrzahl von Finnen, horizontalen Abstütz-, Abstell-, Auflage- oder Halteflächen, Nuten, Ausbrüchen, Aussparungen, Bohrungen, Bolzen, Haken und/oder Stiften aufweist, an denen die Lagergutträger abstützbar sind, wobei die Mehrzahl von Finnen, horizontalen Abstütz-, Abstell-, Auflage- oder Halteflächen, Nuten, Ausbrüchen, Aussparungen, Bohrungen, Bolzen, Haken und/oder Stiften bevorzugt in gleichmäßigen vertikalen Abständen angeordnet sind, wobei die Abstände bevorzugt mindestens 10 mm, weiter bevorzugt mindestens 20 mm und/oder maximal 500 mm, weiter bevorzugt maximal 200 mm betragen, und wobei vorzugsweise die Klemmflächen und/oder die Mehrzahl von Finnen, horizontalen Abstütz-,Abstell-, Auflage- oder Halteflächen, Nuten, Ausbrüchen, Aussparungen, Bohrungen, Bolzen, Haken und/oder Stiften an mindestens zwei Pfeilern und/oder Seitenwänden des Schachts ausgebildet sind.

8. Warenlagersystem nach einem der vorstehenden Ansprüche, wobei die Schächte in einem Raster angeordnet sind; und/oder
wobei jeder Schacht definiert ist durch mindestens zwei, bevorzugt vier, Pfeiler; und/oder
wobei jeder Schacht definiert ist durch mindestens zwei, bevorzugt vier, Seitenwände, und/oder
wobei jeder Schacht definiert ist durch einen Freiraum zwischen den den Schacht begrenzenden Seitenwände und/oder Pfeiler, vorzugsweise ein Freiraum, in welchem der einzulagernde Lagergutträger vertikal verfahrbar ist und wobei der Freiraum eine horizontale Grundfläche aufweist, welche vorzugsweise maximal 120 % einer horizontalen Projektion des einzulagernden Lagergutträgers beträgt.

9. Warenlagersystem nach einem der vorstehenden Ansprüche, wobei die Schächte eine Höhe von mindestens 0,5 m, bevorzugt mindestens 4 m, weiter bevorzugt mindestens 8 m, weiter bevorzugt mindestens 12 m, weiter bevorzugt mindestens 30 m aufweisen, wobei die Schächte bevorzugt in einem Warenlagersegment mit mindestens 12 Schächten gleich groß sind; und/oder
wobei das Warenlagersystem mindestens 4, vorzugsweise mindestens 60, weiter bevorzugt mindestens 100 Schächte aufweist.

10. Warenlagersystem nach einem der vorstehenden Ansprüche, wobei die Schächte und/oder das Bediengerät ausgebildet sind, die Lagergutträger von oben und/oder von unten in die Schächte einzubringen.

11. Warenlagersystem nach einem der vorstehenden Ansprüche, wobei das Warenlagersystem ferner mindestens eine Vermessungseinheit und/oder Sensorik aufweist, die ausgebildet ist,
eine Höhe des einzulagernden Lagergutträgers, eine Höhe von auf dem einzulagernden Lagergutträger befindlichen Lagerguts und/oder die Gesamthöhe des einzulagernden Lagergutträgers inklusive eines oder mehrerer gegebenenfalls darauf befindlichen Lagergüter festzustellen; und/oder
den einzulagernden Lagergutträger inklusive eines oder mehrerer gegebenenfalls darauf befindlichen Lagergüter und/oder das auf dem einzulagernden Lagergutträger befindliche Lagergut in ein Höhenraster einzuordnen.

12. Lagergutträger für ein Warenlagersystem mit einer Mehrzahl von vertikalen Schächten, einer Steuerung und mindestens einem Bediengerät, wobei
der Lagergutträger in jedem der Schächte an einer Mehrzahl von vertikal beabstandeten Abstütz-Positionen abstützbar ist;
der Lagergutträger dazu ausgebildet ist, von dem mindestens einen Bediengerät von oben und/oder unten in einen der Schächte eingebracht zu werden;
wobei:
der Lagergutträger mindestens zwei Träger-Abstützelemente aufweist, die gegenüber einem Grundkörper des Lagergutträgers beweglich sind und dazu ausgebildet sind, zur Abstützung des jeweiligen Lagergutträgers von einer ersten Anordnung in eine zweite Anordnung überführt zu werden, wobei die Überführung vorzugsweise durch Bewegen der Träger-Abstützelemente gegenüber dem Grundkörper erfolgt, wobei der Lagergutträger mit den Träger-Abstützelementen in der zweiten Anordnung vertikal im Schacht gehalten wird und/oder wobei der Lagergutträger mit den Träger-Abstützelementen in der ersten Anordnung durch den Schacht transportierbar ist.

13. Bediengerät für ein Warenlagersystem mit einer Mehrzahl von vertikalen Schächten, einer Steuerung und einer Mehrzahl von Lagergutträgern, wobei die Lagergutträger und Schächte zur Abstützung der Lagergutträger an einer Mehrzahl vertikal beabstandeter Abstütz-Positionen in einem jeweiligen der Schächte ausgebildet sind,
wobei das Bediengerät ausgebildet ist, jeweils mindestens einen einzulagernden Lagergutträger außerhalb der Schächte zu verfahren und von außen, vorzugsweise von oben und/oder unten, in einen der Schächte einzubringen;
wobei das Bediengerät ausgebildet ist, eine Anweisung der Steuerung zu empfangen und die Lagergutträger an einer durch die Steuerung aus der Mehrzahl von Abstütz-Positionen ausgewählten Abstütz-Position abzustützen.

14. Verfahren zur Einlagerung einer Mehrzahl von Lagergutträgern in ein Warenlagersystem mit einer Mehrzahl von vertikalen Schächten, einer Steuerung und mindestens einem Bediengerät, wobei das Warenlagersystem bevorzugt ein Warenlagersystem nach einem der Ansprüche 1-11 ist, wobei das Verfahren die Schritte aufweist:
a. Bestimmung einer Gesamthöhe eines einzulagernden Lagergutträgers aus der Mehrzahl von Lagergutträgern;
b. Auswahl eines bestimmten Schachts aus der Mehrzahl von Schächten, in welchen der einzulagernde Lagergutträger eingelagert werden soll;
c. Auswahl einer Zielposition im ausgewählten Schacht aus einer Mehrzahl von vertikalen Abstütz-Positionen, die in jedem Schacht definierbar sind, wobei
die Zielposition abhängig von der in Schritt a. bestimmten Gesamthöhe ausgewählt wird, und/oder
die Zielposition abhängig von einer Gesamthöhe mindestes eines im ausgewählten Schacht befindlichen Lagergutträgers inklusive eines oder mehrerer gegebenenfalls darauf befindlichen Lagergüter ausgewählt wird; und/oder
die Zielposition abhängig von zumindest einer Abstütz-Position eines oder mehrerer anderer im ausgewählten Schacht befindlicher Lagergutträger ausgewählt wird;
d. Einlagerung des einzulagernden Lagergutträgers an der Zielposition durch Abstützung des einzulagernden Lagergutträgers im ausgewählten Schacht.

15. Verfahren zur Einlagerung einer Mehrzahl von Lagergutträgern in ein Warenlagersystem mit einer Mehrzahl von vertikalen Schächten und mindestens einem Bediengerät, wobei das Warenlagersystem bevorzugt ein Warenlagersystem nach einem der Ansprüche 1-11 ist, wobei das Verfahren die Schritte aufweist:
a. Auswahl eines einzulagernden Lagergutträgers aus der Mehrzahl von Lagergutträge rn;
b. Auswahl eines Schachts aus der Mehrzahl von Schächten, in den der Lagergutträger eingelagert werden soll;
c. Einbringen des einzulagernden Lagergutträgers in den ausgewählten Schacht, vorzugsweise mittels des Bediengeräts, wobei das Bediengerät bevorzugt ein Bediengerät nach Anspruch 13 ist;
d. Überführen des einzulagernden Lagergutträgers im Schacht von einer nicht-abgestützten Anordnung in eine abgestützte Anordnung, wobei sich eine Außenkontur des Lagergutträgers in der nicht-abgestützten Anordnung bevorzugt komplett in einem Freiraum des Schachtes befindet und der Lagergutträger somit vertikal durch den Schacht transportierbar ist und Bereiche der Außenkontur des Lagergutträgers in der abgestützten Anordnung in einer Draufsicht bevorzugt in eine Randkontur des Schachts, insbesondere in mindestens einen, den Schacht begrenzenden, Pfeiler und/oder Seitenwand ragen und der Lagergutträger somit abgestützt wird, wobei das Überführen des einzulagernden Lagergutträgers von der nicht-abgestützten Anordnung in die abgestützte Anordnung vorzugsweise erfolgt durch:
Verdrehen des einzulagernden Lagergutträgers, vorzugsweise in einer horizontalen Ebene, vorzugsweise durch Drehung um eine Vertikalmittelachse des Lagergutträgers und/oder des Schachts, bevorzugt mittels des Bediengeräts und/oder
Verschieben des einzulagernden Lagergutträgers, vorzugsweise in einer horizontalen Ebene, bevorzugt mittels des Bediengeräts.
e. Abstellen des einzulagernden Lagergutträgers auf einer Abstellfläche des ausgewählten Schachts.
